(19) Europäisches Patentamt

European Patent Office

Office européen des brevets

(11) EP 0 438 152 B1

(12) **EUROPEAN PATENT SPECIFICATION**

(45) Date of publication and mention
of the grant of the patent:
**08.07.1998 Bulletin 1998/28**

(51) Int Cl.⁶: **G06F 9/46**, G06F 9/44

(21) Application number: **91100519.7**

(22) Date of filing: **17.01.1991**

(54) **Data processing apparatus with display device**

Datenverarbeitungsgerät mit Bildschirmgerät

Appareil de traitement de données avec dispositif d'affichage

(84) Designated Contracting States:
**AT BE CH DE DK ES FR GB GR IT LI LU NL SE**

(30) Priority: **19.01.1990 US 468605**

(43) Date of publication of application:
**24.07.1991 Bulletin 1991/30**

(73) Proprietor: **CANON KABUSHIKI KAISHA
Tokyo (JP)**

(72) Inventor: **Inoue, Hiroshi,
c/o Canon Kabushiki Kaisha
Ohta-ku, Tokyo (JP)**

(74) Representative:
**Pellmann, Hans-Bernd, Dipl.-Ing. et al
Patentanwaltsbüro
Tiedtke-Bühling-Kinne & Partner
Bavariaring 4
80336 München (DE)**

(56) References cited:
**EP-A- 0 093 835          EP-A- 0 250 157**

• **PATENT ABSTRACTS OF JAPAN vol. 12, no. 303
(P-746)18 August 1988 & JP-A-63 075 937**

**Description**

BACKGROUND OF THE INVENTION

Field of the Invention

The present invention relates to a data processing apparatus with a display device, and more particularly to a data processing apparatus for multitasking operation and multi-windows used with a pointing device such as a mouse.

Description of Related Background Art

In a multitasking operation system such as UNIX or OS/2 (UNIX is a registered trade mark of AT and T, OS/2 is a registered trade mark of IBM Corp.), tasks are executed by the data processing system concurrently and asynchronously. For example, one or more tasks can be executed by the data processing system at the same time that the system is engaged in controlling its display. Also, in a group of several host computers interconnected by a network, a task may be sent for processing from the system where it originated to any other of the host computers. In a multi-window system, information relating respectively to each task in progress can be displayed simultaneously in a different respective window of a single screen. X-window is one of typical multi-window systems presently available (X-window is a registered trade mark of Massachusetts Institute of Technology).

Heretofore, as a computer terminal display device, a refresh-scan-type CRT (cathode ray tube) has been generally used, and a vector-scan-type CRT having a memory characteristic is sometimes used as a large, high-resolution display for CAD (computer-aided design). On a vector-scan-type CRT, an image, once displayed, is not refreshed because of its memory characteristic until a subsequent screen refresh (that is, a refresh of the entire screen) is performed. However, the operation speed is relatively low so that it is not well suited as a display for a real-time man-machine interfacial display, such as a moving cursor display, a moving icon display, a pointing device such as a mouse, or an editorial display. On the other hand, a refresh-scan-type CRT requires a refresh cycle with a frame frequency because it is not provided with a memory characteristic. The display is provided with a new picture at the frame frequency. The frame frequency is expressed as the reciprocal of the product of the number of scanning lines per frame and the horizontal scanning time for each line. The frame frequency is desired to be 60 Hz or more for the purpose of preventing the display from flickering. A non-interlaced scanning scheme is adopted for both types of CRT so that a moving display of data on a screen, e.g., a moving display of an icon, is easy for the user to observe and follow.

With both types of CRT, the higher the desired display resolution becomes for the purpose of, for example, clearly displaying multi-windows, the larger the display becomes, resulting in higher power consumption, a larger driver and a higher cost. Such a large, high-power high-resolution CRT results in various inconveniences. For this reason, flat panel type displays have been recently developed.

At present, there are various flat display panels. One employs a highly multiplexed drive system using super twisted nematic liquid (STN) crystals. A second is a modification thereof, used for a white-and-black display. A third is a plasma display system. All of these adopt the image data transfer scheme of the CRT system and a non-interlaced scanning scheme with a frame frequency of 60 Hz or higher for screen refreshing, and therefore require a total number of scanning lines on the order of 400 to 480 lines for one full screen. A large flat display panel having, e.g., 1000 or more scanning lines is not still in practical use. This is because these display panels require a refresh cycle with a frame frequency of 60 Hz or higher to prevent flicker. Also, this requirement in turn leads to a single-line scanning time of 10 to 50 $\mu$s or shorter, which is too short to provide good contrast.

With a CRT, an image formed on a fluorescent screen persists for a certain time due to the fluorescence. In a TN-type LCD (twisted nematic-type liquid crystal device), an image is formed by utilizing transmittance changes effected by an application of a sufficient driving voltage. In both types of device, it is necessary to use a high frame frequency of 30 Hz or higher.

For example, for a CRT display or TN-type LCD comprising 1920 scanning lines and 2560 pixels per line, i.e., 4,915,200 pixels, the horizontal scanning time is about 17.5 $\mu$s and the horizontal dot clock frequency is about 147 MHz. In the case of a CRT, a horizontal dot clock frequency of 147 MHz leads to a very high beam scanning speed which far exceeds the maximum electron beam modulation frequency of the beam guns used in picture tubes available at present, so that accurate image formation cannot be effected. In the case of a TN-type LCD, driving a total of 1920 scanning lines corresponds to a duty factor of 1/1920, which is much lower than the minimum usable duty factor of about 1/400 now possible. On the other hand, if driving at a practical horizontal scanning speed is used, the frame frequency becomes lower than 30 Hz, and flickering impairs the display quality. For these reasons, enlargement and densification of the picture obtainable with CRTs and TN-type LCDs has been limited because the number of scanning lines cannot be sufficiently increased.

In recent years, Clark and Lagerwall (US-A-4,367,924) have proposed a ferroelectric liquid crystal device (FLCD) having both a high-speed responsive characteristic and a memory characteristic (bistability). The FLCD shows a smectic C phase (SmC*) or H phase (SmH*) in a specific temperature range, and has optical bistability. The FLCD shows a quick response to changes in the applied electric field and is therefore expected to be widely used as a high speed memory-type display device.

The FLCD is capable of being used in a large, high-resolution display which surpasses the above-described flat panel display device. In view of its low frame-frequency drive, it is provided with a partial rewriting scanning scheme utilizing a memory characteristic in order to provide a man-machine interfacial display device. In the partial rewriting scanning scheme, only a region on a screen to be overwritten is scanned to make a new picture. Such partial rewriting scanning has been disclosed in US-A-4,655,561. A flat panel display comprising 1920 scanning lines x 2560 pixels per line has been achieved using the bistability effect of the FLCD.

In a line by line scanning scheme of the FLCD, the frame refresh frequency decreases as the number of scanning line increases. For example, the frame frequency for the FLCD with the speed of 50 µs/line is; 1920 (lines) x 50 (µs/line) = 96 (ms) = 10 (Hz).

On the other hand, it is a very important factor for the operability of computers that the speed for the real time response and smoothness for the pointing device movement and for the keyboard input are sufficient. The pointing device symbol (e.g. the mouse font) and character are relatively small in terms of their display area but require a higher response rate for displaying them. For example, a mouse font is written normally at 60 Hz, and a character is written at 30 Hz. Therefore, the frame frequency of 10 Hz is not sufficient for such operation. The use of aforementioned "partial rewriting scanning technique" enables the display to rewrite only the necessary portion of the display with a new information, thereby largely reducing the time required for updating the displayed information. For example, if the mouse font is defined by 32 x 32 bits data, the speed for displaying the data is;

$$32 \text{ (lines)} \times 50 \text{ (µs/line)} = 1.6 \text{ (ms)} = 525 \text{ (Hz)}.$$

However, to actually use this "partial rewriting scanning technique", it is necessary to recognize the "partial rewriting requests" and to indicate the display device the number of lines to be rewritten. Moreover, the actual frequency for the partial rewriting is on the order of about 300 Hz because of some other factors. However, in general, the use of the FLCD as a large display device provides a greatly improved real time display of a mouse font or the like.

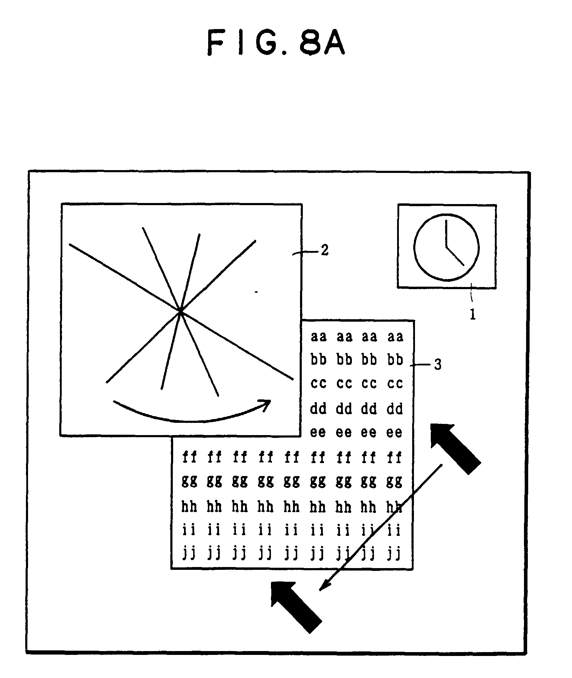

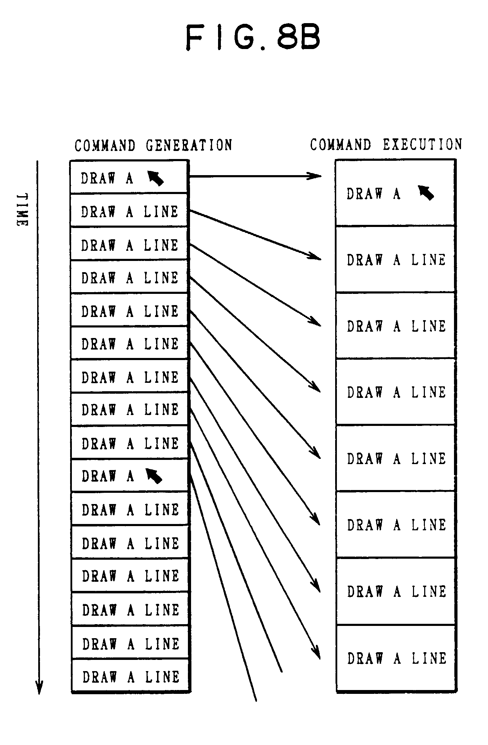

However, for a display device for displaying in real time a plurality of tasks on multi-windows, there arises another problem. Referring to Fig. 8A, three windows 1, 2, 3 are open in the screen of one display device. In window 1 a first task displays a clock with its hands moving from time to time. In window 2 a second task displays a rotating line rotating in the direction of the arrow. In window 3 a third task like a text editor displays characters. Also, in a base (root) window, a system task displays a mouse font of an arrow moving from one location to another. Fig. 8B illustrates the time sequence of the generation of drawing commands and the time sequence of the execution of those commands.

As illustrated in Fig. 8B, it is assumed that eight commands to draw a line are generated during the period between the generation of a first mouse font display command and a second mouse font display command. Even with a computer which executes multi-tasks, drawing commands from the multi-tasks are not processed concurrently in parallel but processed one command after another as a single sequence. Therefore, the second mouse font display command is executed only after the previously generated eight commands to draw a line are executed. If the execution time of a drawing command, i.e., the actual drawing time by a graphics device (depending mainly upon hardware attributes of the device), takes longer than the speed of the generation of commands, a time delay occurs between the generation and execution of a command. As a result, the second mouse font display is delayed correspondingly.

In order to make such a time delay small, it is necessary to improve the hardware operation speed of a graphics device and the software operation by adopting such as aforementioned partial rewriting scanning technique. It is a main issue to be considered here that a real time display of a hardware event is considerably imparted by a drawing command generated by another task (or in rare case, generated by its own task). For this reason, there is a possibility of a problem, particularly with a multi-window system, that a mouse font display on the screen becomes unable to follow the actual mouse operation.

In computer operations, inputs from a mouse and keyboard are called hardware (H/W) events. The real time processing of H/W events in a computer system should be ensured as much as possible, because such H/W events are directly associated with the operation by an operator and the real time processing of H/W events essentially means the operability of the system.

## SUMMARY OF THE INVENTION

It is an object of the present to provide a data processing apparatus with an improved real time display of a hardware event, in particular for a large, high resolution FLCD or a multi-window system.

According to the present invention this object is accomplished by a data processing apparatus as defined in claim 1.

The present invention will be described hereinbelow by way of example and with reference to the accompanying drawings.

BRIEF DESCRIPTION OF THE DRAWINGS

Fig. 1 is a block diagram showing the hardware arrangement of a computer system embodying the present invention;

Fig. 2 is a block diagram showing the detail of the graphics controller shown in Fig. 1;

Fig. 3 is a block diagram showing the detail of the graphics card shown in Fig. 1;

Fig. 4 shows the arrangement of an X-window system under the environment under which the embodiment of this invention operates;

Fig. 5 shows the module arrangement of the X-window system;

Fig. 6 is a flow chart showing event scheduling;

Fig. 7 shows the structure of layers of the server;

Fig. 8A illustrates how a picture is drawn in X-windows of a multi-window system;

Fig. 8B illustrates a conventional time sequence of drawing commands and their execution in a multi-window system;

Fig. 9A illustrates how a picture is drawn in X-windows of a multi-window system;

Fig. 9B illustrates a time sequence of drawing commands and their execution in a multi-window system according to an embodiment of this invention;

Fig. 10 is a block diagram showing a queue system according to an embodiment of this invention;

Fig. 11 is a flow chart illustrating the QSpace () in the WaitForSomething () routine;

Fig. 12A is a flow chart showing a first example of the WaitForSomething () routine;

Fig. 12B is a flow chart showing a second example of the WaitForSomething () routine;

Fig. 13 shows signal waveforms in the graphics card shown in Fig. 2;

Fig. 14 illustrates the concept of the layer structure of scheduling according to this invention;

Fig. 15A illustrates the Head, Tail and contiguous free space of the graphics command buffer;

Fig. 15B shows examples of the Head addresses, Tail addresses, and sizes of contiguous free spaces;

Fig. 16A is a flow chart illustrating the command transfer at the host side;

Fig. 16B is a flow chart illustrating the first half of the PutBlock () in the transfer flow shown in Fig. 16A;

Fig. 16C is a flow chart illustrating the second half of the PutBlock () of the transfer flow shown in Fig. 16A;

Fig. 17A is a right half flow chart illustrating the command reception and execution at the remote side;

Fig. 17B is a left half flow chart illustrating the command reception and execution at the remote side;

Fig. 17C is a flow chart illustrating the GetBlock () in the flow shown in Fig. 17A;

Fig. 18 is a flow chart illustrating the ReadREquestsFromClient ();

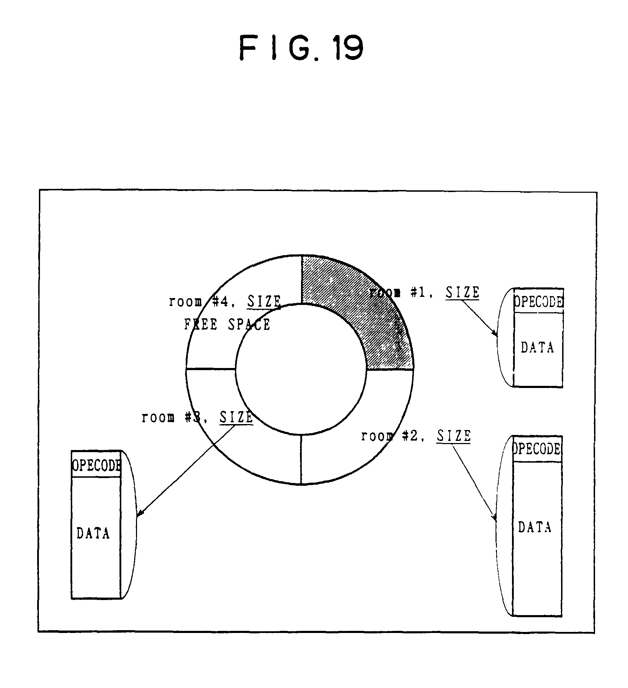

Fig. 19 shows another structure of the graphics command buffer the present invention is applicable to;

Fig. 20 is a flow chart illustrating the QSpace () using the buffer structure shown in Fig. 19; and

Fig. 21 is a flow chart illustrating the WaitForSomething () using the QSpace () shown in Fig. 20.

DETAILED DESCRIPTION OF THE PREFERRED EMBODIMENTS

(1) Structure of Hardware

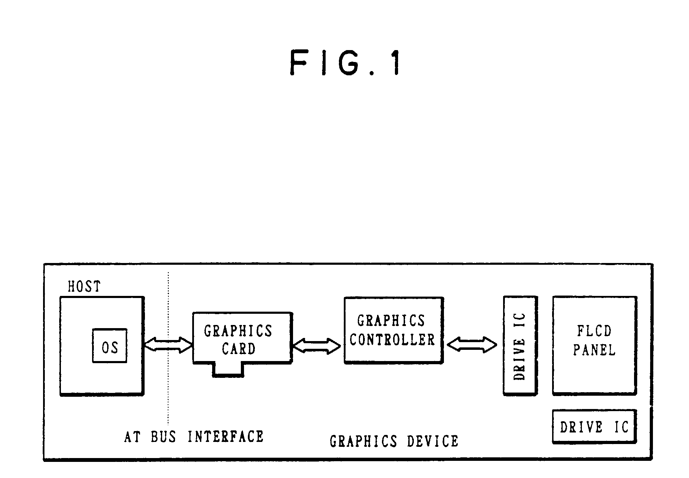

As an embodiment of this invention, there is provided a computer system with a ferroelectric liquid crystal display FLCD. Fig. 1 is an illustration of the outline of the hardware structure of the system. The system is constructed of a section controlled by a host processor and a section controlled by a graphics device processor. The host and graphics device processors operate independently from each other. The term "graphics device" used herein collectively means a device inclusive of a graphics card, a graphics controller and a FLCD panel. The host processor is provided with OS for executing processes in a time sharing manner. A drawing command generated by each process is given via a bus interface to the graphics card of the graphics device. The graphics card has a function to develop the contents of a drawing command into a video VRAM and a function to manage specific partial rewriting of the contents of a drawing command on the FLCD panel. The contents of VRAM are supplied in the form of digital signals to the next stage, i.e., the graphics controller. In accordance with the digital signals representative of the contents of VRAM including partial rewriting information, the graphics controller generates drive signals for displaying graphics images on the FLCD panel at proper addresses and sends them to a driver IC.

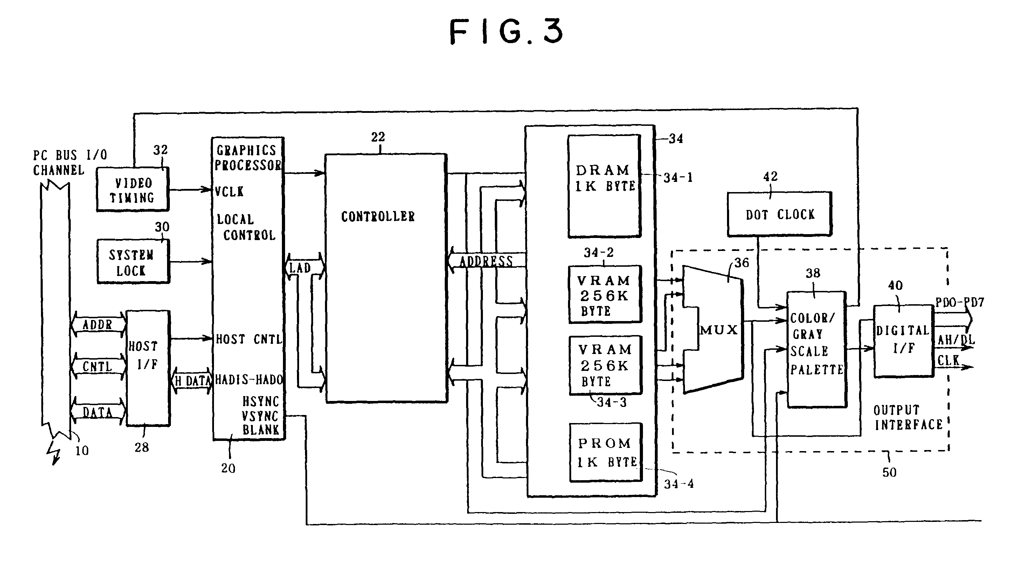

A block diagram of the embodiment of the graphics card is given in Fig. 3. The graphics card is constructed of a graphics processor 20 and a memory controller 22 for the control of an interface 28 and a memory 34. The memory 34 is constructed of a RAM 34-1 for storing commands, VRAMs 34-2 and 34-3 for storing video outputs, and a ROM 34-4 for storing initial control commands for the graphics processor 20. A graphics command buffer for the graphics device to be described later is logically realized by RAM 34-1. Some of these memories may be realized on the main memory of the host. Data is transferred between the processor 20 and the memory 34 by means of the memory controller 22. A video timing unit 32 provides a clock 30 to the graphics processor 20 as its timing signal. The outputs of VRAMs 34-1 and 34-2 are inputted to an output interface 50. The data supplied to the output interface 50 passes through a multiplexer 36 and is given a proper gray scale or a color signal level. The output from the multiplexer is supplied to a digital interface 40. The digital interface 40 generates screen address data, image data (signal lines PD0 to PD7), a signal AH/DL for discriminating between address data and image data, and a timing signal CLK, all being supplied to the next stage graphics controller.

The graphics processor 20 may be for example a Texas Instruments GSP34010 processor, which can execute both graphics commands and general-purpose commands, and the interface may be an IBM "AT Bus", both of which are familiar to those skilled in the art. The GSP34010 processor is described in detail in the TMS34010 User's Guide published by Texas Instruments Inc (publication number SPVU007).

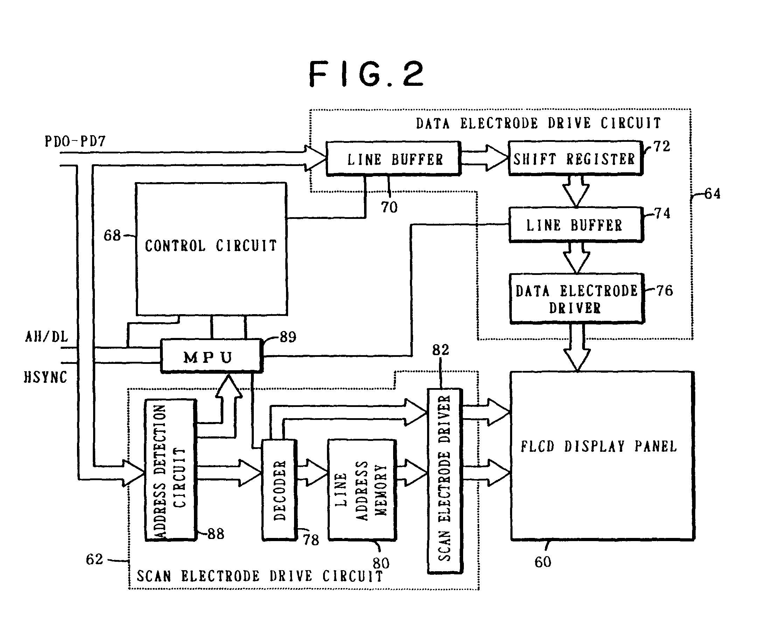

Fig. 2 is a block diagram of the graphics controller for receiving drawing data from the graphics card and driving the FLCD panel. The FLCD panel comprises a matrix electrode structure composed of 1920 scan electrodes and 2560 data electrodes, the former being connected to a scan electrode driver 62 and the latter to a data electrode driver 64. The scan electrode driver 62 includes a decoder 78, a line address memory 80, and an address detection circuit. The data electrode driver 64 includes a shift register 72, a line memory 74 and a buffer 70.

Scan electrode address data (A0, A1, A2, ..., A15) for addressing the scan electrodes 84 designating the drawing position on the panel screen and image data (D0, D1, D2, ..., D2559) are transferred through the same signal lines PD0 to PD7. Thus, the signal AH/DL is sent to the processor 89 at the same time for identifying if the transferred data is the address data or the image data. The control circuit 68 causes the signal on PD0 to PD7 to be received by the address detection circuit 88, if the AH/DL signal is high level indicating that the signal is the scan electrode address data. If the AH/DL signal is low level indicating that the signal is the image data, the signal is received by the line buffer 70. The AH/DL signal also serves as a transfer start signal for transferring data.

The image data received by the line buffer 70 is temporarily stored therein, and sent via the shift register 72 and line buffer 74 to the data electrode driver 76 during the horizontal scan period. The address data detected by the address detection circuit 88 is decoded into a scan electrode drive signal by the decoder 78, and sent via the line address memory 80 to the scan electrode driver 82.

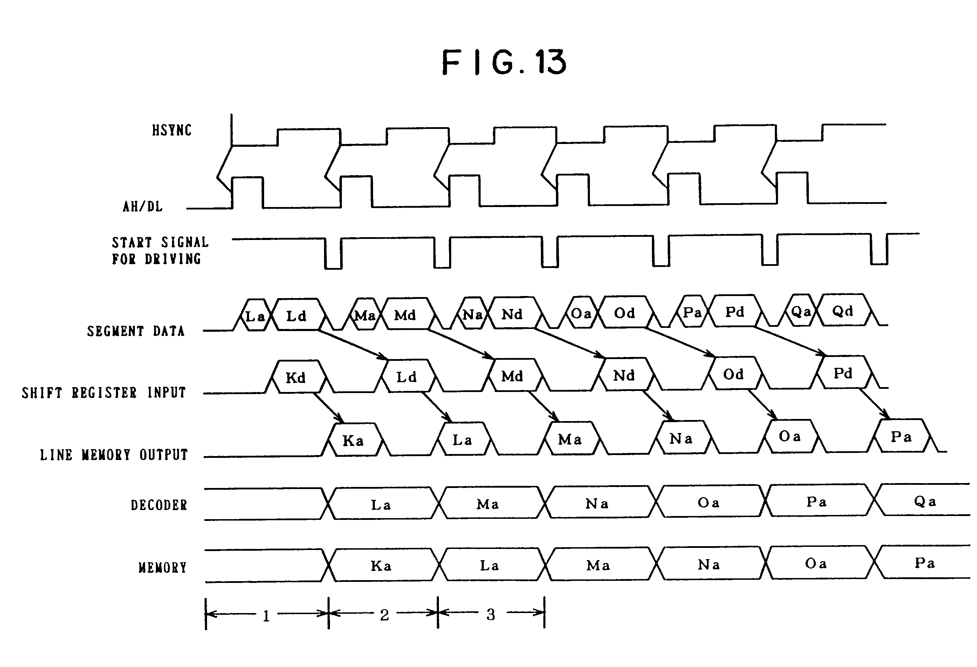

In this embodiment, driving the display panel 60 is not synchronous with the generation of the scan electrode address data A0 to A15 and image data D0 to D2559 by the processor of the graphics card, so that it is necessary to synchronize the control circuit 68 and the graphics processor when data is transferred. For this purpose, the control circuit generates a synchro signal Hsync for each horizontal scan. This Hsync signal is related in time to the signal AH/DL. The graphics processor 20 monitors the Hsync signal and stands by for data transfer when the Hsync signal changes from high level to low level. Thereafter, the graphics processor 20 changes the AH/DL signal from low level to high level to transfer the scan electrode address data, and again changes the AH/DL signal from high level to low level to transfer the image data. The detailed signal waveforms thereof are shown in Fig. 13.

According to the present invention, real time processing for an H/W event of the graphics device shown in Fig. 1 is improved. The characteristic feature of this invention resides in a logical interface structure between the host and the graphics device.

(2) Structure of Software (Logics)

Summary

In the logical structure of this invention, there is used an X-window graphics user interface (GUI) running on an UNIX operation system (OS) and implemented on the hardware shown in Fig. 1. The essential portion of the UNIX operation system is called a kernel. A user program interacts with the kernel in response to a system call such as open (), read () and the like. UNIX functions such as file systems, multitask mechanism (time sharing), inter-process communication, and the like are supplied from the kernel. OS is a system software constructed of a plurality of modules supplied from a vendor to a user. A device driver, which is one of modules of OS, directly controls an input/output hardware device and provides an interface to the kernel specific to UNIX, independent from a hardware device. This device driver controls the display device, and a user program instructs the device driver to draw a picture on the display device. The device driver is programmed using following I/O system calls while considering the function of the kernel and the hardware attributes of the device.

```
#include <termio.h>
int ioctl (fd, cmd, tbuf) /* terminal device control */ int fd; /* open file descriptor */ int cmd; /* command for designating
```

operation to be executed */ struct termio * tbuf; /* pointer to structure for terminal information */

For example, a command TCGETA is a command to fill a termio structure with terminal information referred by fd. Although the device driver is linked to the kernel to become a new kernel image, it is not inherent to the UNIX kernel.

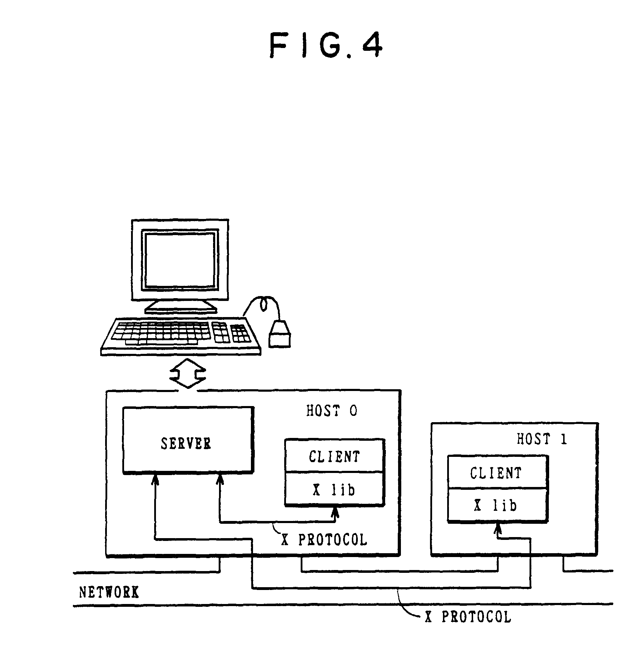

The X-window is a software system for providing a user with multi-window programming environments as a GUI configured on the UNIX kernel including the graphics device driver function. The outline of the system arrangement of the X-window system is shown in Fig. 4. The x-window system is a GUI for generating multi-windows on a screen, and is expressed by a server/client model. A server program is the essence of the X-window (base window system) and interacts with a work station generally equipped with a screen, a keyboard, and a mouse, to generate and display windows on the screen and form graphics images on the windows, or to detect and process a hardware H/W event from the keyboard or mouse. A client program means a user program, X library, and window manager. Namely, a client or user process can rely graphics processing on the server. In this case, a client can describe a multi-window function without considering the hardware attributes of the graphics device. The hardware attributes are absorbed by the server.

Data transfer between the client and the server relies on an X-protocol. The server executes operations dependent on the vender such as OS and hardware, so that the client can describe programs not considering hardware if a partner system understands the X-protocol. The client at host 1 communicates with the server at host 0 via a network using the X-protocol to control the work station at host 0. In other words, the X-window system is network-transparent. The server process at host 0 (remote) serves as an agent for the client process at host 1 (local). If an object client is at host 0, communication is conducted via its server without using the network. An application does not handle the X-protocol directly, but it calls a library function Xlib which in turn provides the X-protocol. The server at host 0 can provide multitask services to two processes at host 0 and host 1.

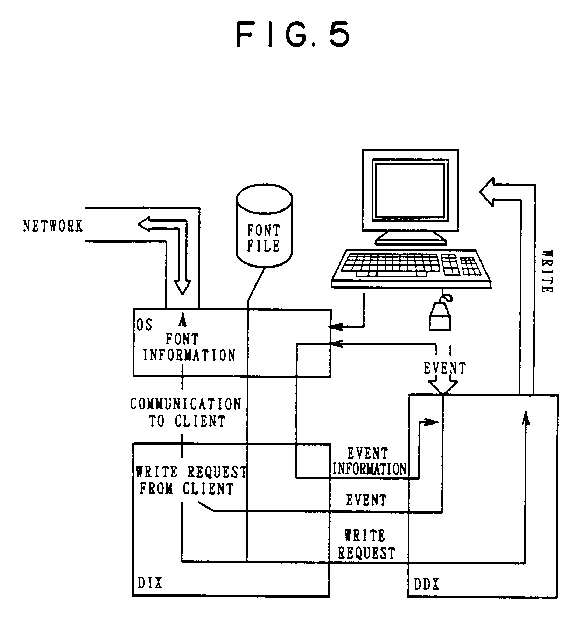

Fig. 5 illustrates the modular structure of the X-window system. The following is an example of a user application program using Xlib functions by which a client displays a 500 x 300 window w on the screen.

```
#include <XII/Xlib.h>

#include <XII/Xutil.h>

main ()

{

    Display  *d;


Window   w;

Unsigned long black, white;

d = XOpenDisplay (NULL)

w = XCreateSimpleWindow (d, RootWindow (d, 0), 100, 500,

                         300, 2, BlackPixel (d, 0),

                         WhitePixel (d, 0));

XMapWindow (d, w);

}
```

The XOpenDisplay () is an Xlib function to establish a connection between the user process and the designated server within the network system, the XCreateSimpleWindow () is an Xlib function to generate a 500 x 300 window w on the screen under control of the server, and the XMapWindow () is an Xlib function to generate the X-protocol for displaying the generated window on the screen and supply the X-protocol to the X server.

Structure of Server

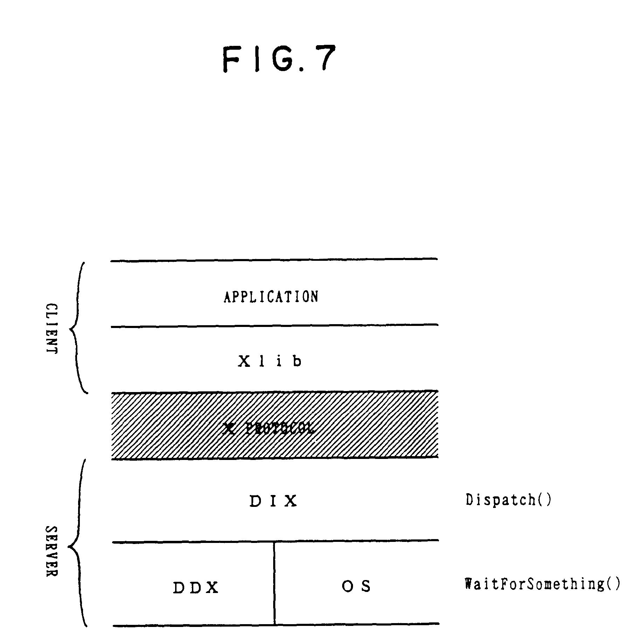

The main task of the server is to establish a connection to a client, to process requests from a plurality of clients in a balanced manner, and to distribute an event from hardware such as a display, mouse and keyboard to a plurality of clients. As shown in Fig. 7, the server is constructed of four layers including a DIX (Device Independent X), DDX (Device Dependent X), OS, and Extension function (EXT: Extension). It is important for the description of this invention to understand these layers.

DIX layer: all operations by the server is executed by first calling a function at another layer from DIX. In accordance with the called function, client requests are processed, input events are read, and distributed to clients. DIX is not dependent on the machine, devices and OS, but communicates with a client by the X-protocol. A routine Dispatch () for scheduling event processes belongs to the DIX layer.

DDX layer: this layer includes all functions to directly control input/output devices, and is described considering the devices and OS. This layer consists of an input section and an output section. The input section is used for controlling an input device, such as reading an event from hardware, adjusting the mouse motion sensitivity, generating mapping information of key codes. The output section is used for controlling an output device, such as generating/changing a graphic context (GC). These functions for each device are called from DIX with the data structure being accompanied.

OS layer: this layer performs a read/write function for the client connection, network connection and the communication therebetween and a function for notifying the client of any input event (this function is sometimes performed with DDX). This layer also performs a function for smoothly controlling the time sharing among clients, an interface access function for accessing a font file, and a low level memory management function.

EXT layer: This layer is used for extending the server function and X-protocol. This layer is not required for an ordinary server, and is used for a display device having a particular function.

As described above, the X-window system is an operating system configured on the UNIX kernel for providing a user with a network-transparent multi-window environment. A user can access the multi-window function via the X-protocol as well as the aforementioned functions specific to UNIX. The X-window system is provided in the host computer of the embodiment shown in Fig. 1, and the hardware attributes of the graphics device FLCD are described in DDX and OS layers.

To help understand the system operation, a client user program for a server is illustratively given below for displaying a character X on the screen at a click point of the mouse.

```
#include <XII/Xlib.h>

#include <XII/Xutil.h>

main ()

{

   Display  *d;

   Window  w;

   Font  f;

   GC  gc;
```

```
XEvent    e;
    .
    .
    .
XSelectInput (d, w, ButtonPressMask);
    .
    .
    .
XNext Event (d, $e)

XDrawString (d, w, gc, e.xbutton.x, e.xbutton.y,

                   "x",1);

}
```

This program asks the server to inform of a mouse click event by setting XSelectInput (). An XNextEvent () reads an H/W event, and the mouse position coordinate information at the time of the click is described in the $x$ and $y$ members of XButtonEvent structural member $e$. An-XDrawString () instructs the server to draw a character X in the window at the screen position designated by $x$ and $y$ members. The server performs a detection of an H/W event and a notice thereof to the client. The client receives a drawing command generated in response to the H/W event, and controls the graphics device to draw the character. As above, the client user program is described independent from a hardware device, and the server interfaces with the hardware device to provide services to the client.

Scheduling

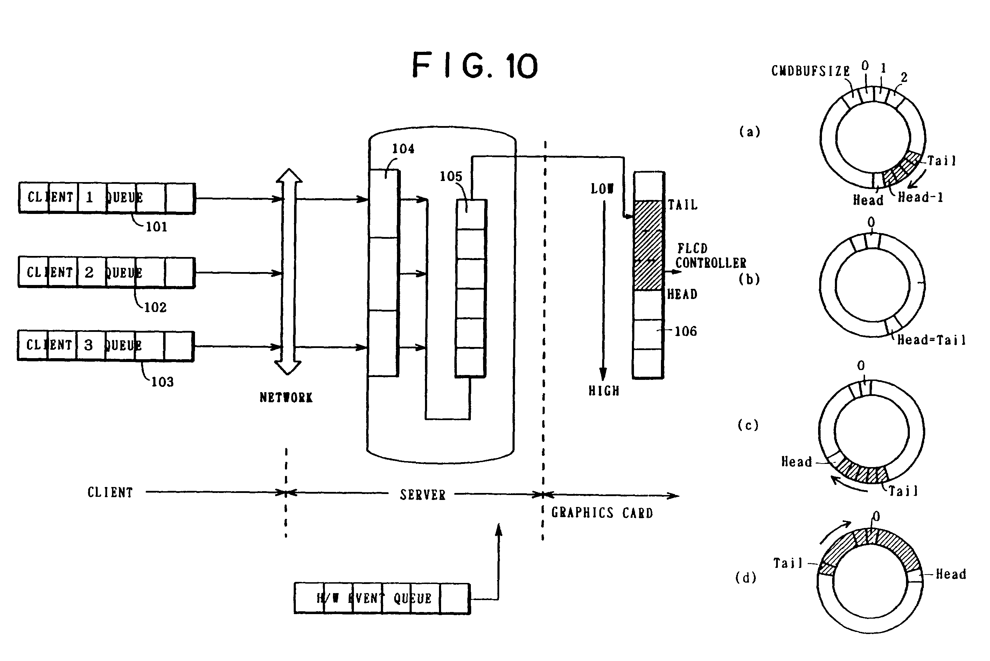

The server is a single process provided in correspondence with a single work station (terminal: screen, keyboard, mouse) for the control of the work station. The server nevertheless provides services to a plurality of processes, i.e., a plurality of clients. The term "process" herein used means an environment under which a program runs. A process is constructed of three segments including a command segment, a user data segment, and a system data segment. A program is used for initializing a command and user data. A program can be executed by a plurality of processes in parallel with each other with respect to time. A multitasking system executes a plurality of processes in parallel in a time sharing manner. This time sharing of a plurality of processes is executed by the UNIX kernel. The scheduling by the server defines the order of processing a generated drawing request and a service request such as processing an H/W event. A queue system according to an embodiment of this invention is shown in Fig. 10, the queue system making services of a plurality of clients. Drawing commands generated by clients are stored in client queues 101 to 103 provided for each client, in the order of generation.

The stored command is transferred from an entry point 104 to a server queue 105. Specifically, commands from a plurality of clients are formed in a single sequence and inputted to the server queue 105 for sequential processing like a single task. A certain group of commands in the server queue 105 of the host processor is passed to a graphics command buffer 106 of the graphics device processor. After passing the command group to the graphics device processor, the host processor executes another process for its own by making the graphics device processor execute the passed command group. The command group is developed into commands for the graphics device processor in the graphics command buffer 106 and stored in the area between Tail to Head - 1 as shown in Fig. 10. The graphics device processor sequentially executes the commands starting from Tail to Head. Tail comes near Head as the commands are executed one after another. When it becomes Tail = Head, it means that the passed command group has been executed. Then, the next command group is passed from the server queue 105 to the graphics command buffer 106. This next command group is stored at the address higher than the former Head. Namely, Tail of the commands developed from the next command group becomes the former Head. The graphics command buffer 106 is shown schematically as a ring shape in Fig. 10. It is to be noted that Head > Tail at (a) in Fig. 10, and Tail < Head at (d) in Fig. 10.

As shown in Figs. 8A and 8B, the reason why a graphics image cannot be formed in real time upon occurrence of an H/W event such as a mouse event, is that the process speed at the graphics device is not so fast as the occurrence of drawing commands so that many commands not-yet-executed remain in the server queue 105 at the time when an event occurs. Although the server system detects an H/W event with priority over other processes and informs the client of the occurrence of the event, the drawing command generated by the client for the H/W event is executed after the commands remaining in the server queue 105 at that time have been executed, because the server queue 105 sequentially executes commands merely in a single task manner.

Events to be serviced by the server are generated asynchronously from a plurality of client processes or hardware devices. The routine Dispatch () in the DIX layer of the server schedules the events and controls the process flow thereof. Specifically, generated events are scheduled by the Dispatch () routine of the DIX layer. The command associated with the event is transferred from the client queue to the server queue in order to execute it at the graphics device under control of the server in accordance with the routine called from the DIX layer. If both a drawing request from the client and an H/W event conflicts each other, the Dispatch () routine selects the H/W event with priority over the drawing request, to thereby realize real time processing.

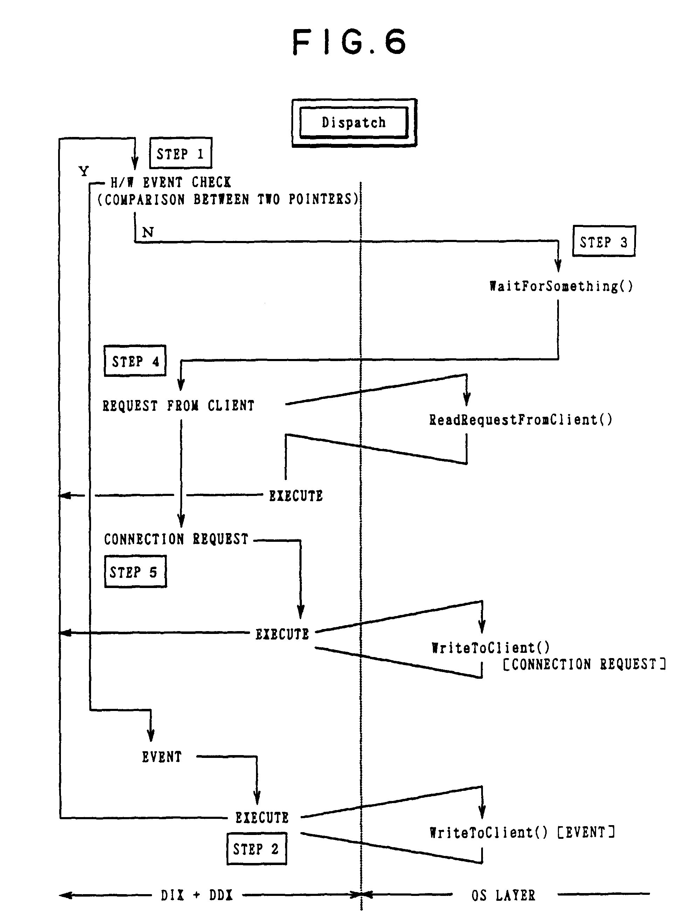

Fig. 6 is a flow chart illustrating the scheduling by the Dispatch () routine.

Step 1: It is checked if there is an H/W event (operation of keyboard, mouse). Head and tail pointers to the event queue are checked. If two pointers are different, the stored event is read from the event queue.

Step 2: If the H/W event check is YES, there is executed a process of character display or mouse cursor display for that event. Data transfer between the server and the client is performed by the WriteToClient () called from the OS layer. The detected H/W event is informed to the client, and the drawing command generated by the client for that event is stored in the server queue, to thereafter terminate the process and returns to step 1.

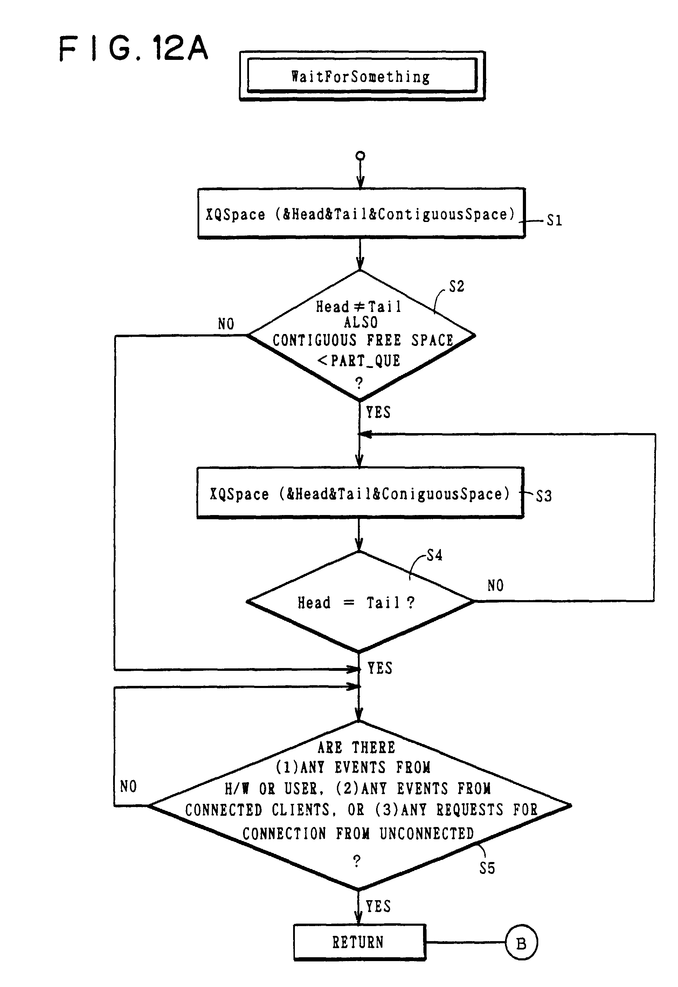

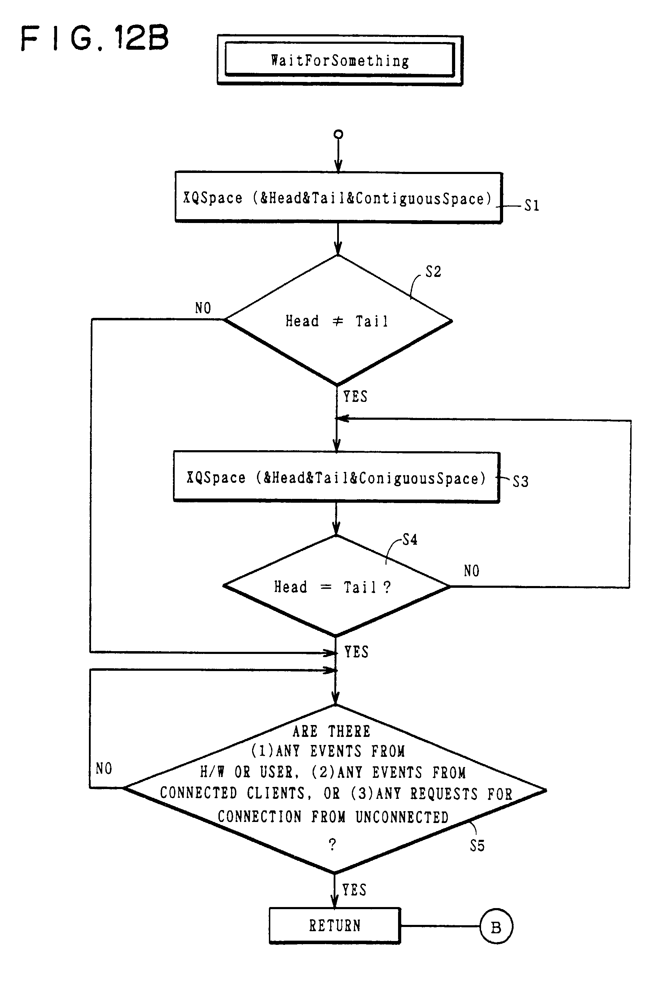

Step 3: If the H/W event check is NO, the WaitForSomething () is called from the OS layer. The detail of the WaitForSomething () is illustrated in Fig. 12. This function, as explicitly described, waits for and monitors an event. An event to be waited for includes;

* an event from a hardware, user,
* a request from a client already connected to the server (drawing command), and
* request for connection of an unconnected client to a designated server.
    Upon occurrence of such an event, necessary information such as the type of event is set and sent back to the Dispatch () of the DIX layer.

Step 4: If a generated event is a request from a connected client, the ReadRequest-Client () is called from the OS layer to read for example a drawing command in the client queue and store it in the server queue to thereafter return to step 1.

Step 5: If a generated event is a connection request of a client to a server, data for connection establishment is written in the client by the WriteTo-Client () of the OS layer, to thereafter return to step 1.

The Dispatch () of the DIX layer is a function for the scheduling of service requests to the server. With this function, the flow branches to a routine process necessary for the service type to execute a drawing process at the branched routine process. This scheduling takes the H/W event with priority over other processes. Namely, if there is a stored event in the event queue, it is executed with priority to realize real time processing.

As discussed previously, use of only the Dispatch () scheduling for scheduling a stored event in the event queue with priority poses a problem of inability of real time processing of an H/W event, because there may be present between two H/W events of a client a not-executed drawing command of another client which is required to be executed first at the graphics device. Such a case results from the fact that the host server generating a command and the graphics device processing the command operate asynchronously. The above asynchronous operation problem is solved by the present invention in such a manner that the server monitors the process status of the graphics device through the WaitForSomething () to control the event processing scheduling.

WaitForSomething ()

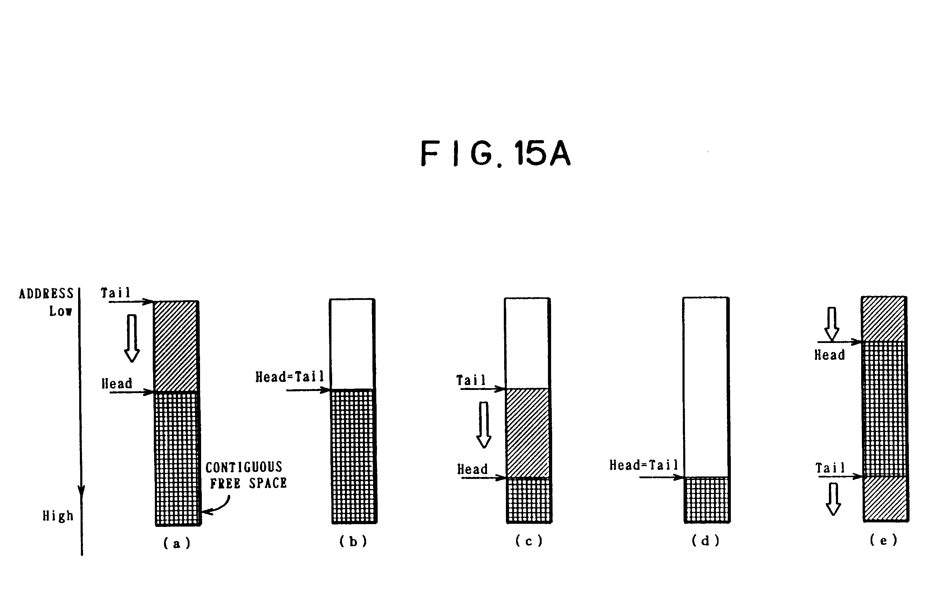

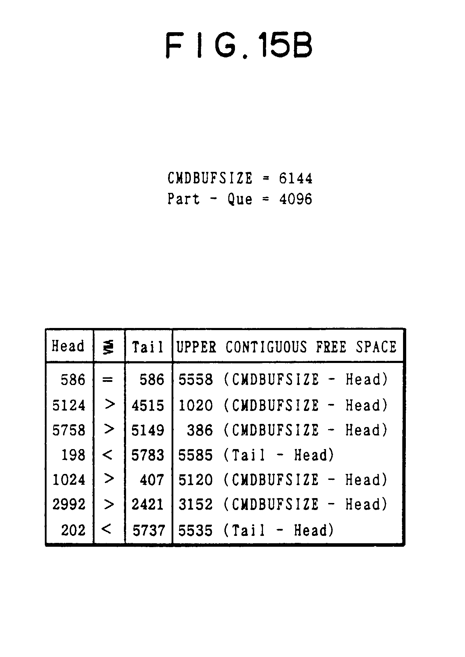

Prior to describing the WaitForSomething () routine, the concepts of the Head, Tail and contiguous free space of the graphics command buffer 106 will be described with reference to Figs. 15A and 15B. Figs. 15A and 15B show various structures of command data developed within the graphics command buffer. The data transferred from the server queue 105 is sequentially written into the graphics command buffer starting from the Tail address to the Head address, and is executed by the graphics processor from the Tail address to the Head address. The Head address is updated each time data is written in the graphics command buffer 106, and the Tail address is updated as data is executed by the graphics processor. The structures indicated at (a) and (c) in Fig. 15A are for the case where the Head address is greater than the Tail address. The structures indicated at (b) and (d) in Fig. 15A are for the case where the Head address equals the Tail address. The structure indicated at (e) in Fig. 15A is for the case where the Tail address is greater than the Head address. Fig. 15B illustrates examples of the Head addresses, Tail addresses and sizes of contiguous free spaces using the Qspace () routine of this invention to be described later.

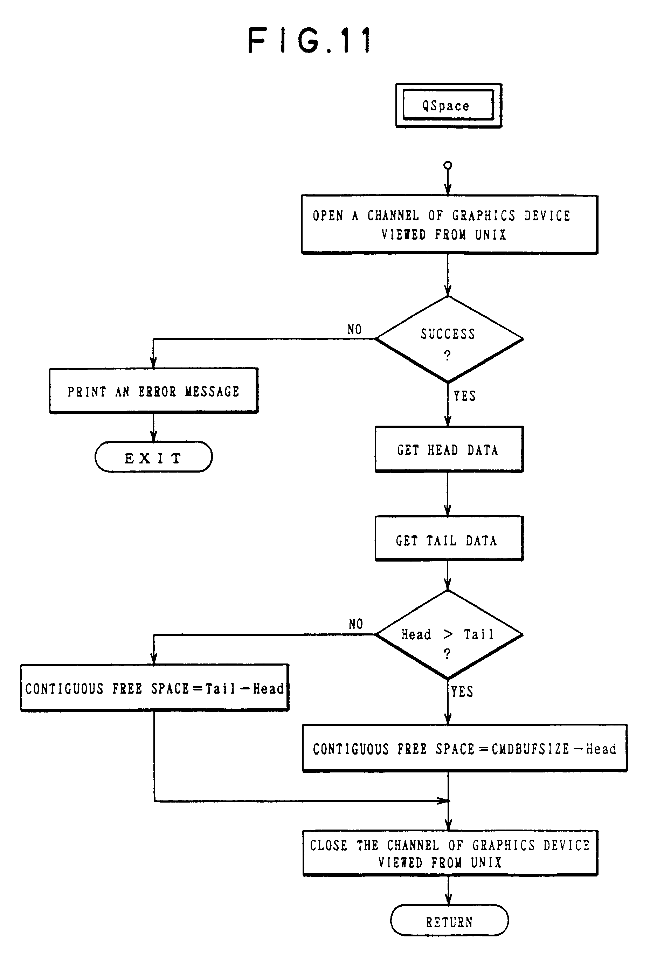

According to this invention, the WaitForSomething () routine of the DIX layer shown in Fig. 12A first calls the XQSpace function () which is obtained by developing the QSpace () function shown in Fig. 11 into the X-window. The QSpace () is used for monitoring the graphics command buffer 106 and receiving the Tail and Head addresses to calculate the contiguous free space. In order to monitor the buffer state of the graphics device, there is opened a channel through which a device access permission is requested to the OS layer. Immediately after monitoring, the channel is closed. The channel open/close before and after calculation ensures the multitasking efficiency. When the device access is permitted, the physical memory space occupied by the device is locked in order for the OS layer not to assign it to another program. This results in the state that a virtual storage system of multitasking is occupied by one process similar to the single task system. Since this "lock" state depends on the result of monitoring the device processing capability, a new request is intercepted to be processed until the lock state is released even if the graphics processor is busy. In this manner, the QSpace () substantially synchronizes the operations of the graphics processor and OS in accordance with the processing capability. Such a lock state is to be avoided as much as possible in the UNIX system, and its multitasking state is to be resumed as soon as possible. In view of this, the QSpace () is called and the channel is opened immediately before calculation, the memory is locked, and after the execution the channel is closed to release the memory.

When a channel is opened by the QSpace (), the Head and Tail addresses of the graphics command buffer are received. If Head > Tail, the contiguous free space is calculated from (CMDBUFSIZE) - Head, whereas if Head < Tail, it is calculated from Tail - Head. The received and calculated data by the QSpace is sent back to the WaitForSomething ().

At step S2 shown in Fig. 12A, it is checked if Head ≠ Tail (i.e., not-executed command is present within the graphics command buffer) and if the contiguous free space is smaller than a predetermined value PART-QUE (i.e., free space within the graphics command buffer for storing the next command group from the server queue is insufficient). If YES, it means that the next command group is not prepared to be received and executed. Thus, at step S3 the QSpace () is again called to access the graphics command queue and receive the Tail and Head addresses. As the command execution processes proceed from the previous QSpace () and there is no command not executed, then the check at step S4 indicates that Head = Tail to thereby advance to step S5. However, if there is a command not executed and the check at step S4 is NO, then the flow loops to return to step S3 until a command not executed becomes not present, i.e., Head = Tail. If the check at step S2 is NO, i.e., if the data obtained by the QSpace at step S1 indicates that Head = Tail or Head ≠ Tail, and if there is a sufficient contiguous free space for storing the next command group, then the flow advances to step S5.

At step S5, monitored is an occurrence of a service request event (H/W event, drawing request from a connected client, connection request of an unconnected client to a server) at the H/W event queue and the client queue. If there is an event in the queue, the information including the event type is sent to the Dispatch () of the DIX layer to advance to step S4 in the flow chart shown in Fig. 6.

As described above, with the WaitForSomething () of this invention, monitoring a service request event at step S5 is not allowed to start until the graphics device processor becomes able to execute the next drawing process. Thus, a drawing request from the client is suspended if the operation status of the drawing process by the graphics device is not proper, without immediately executing the request and storing the drawing command in the server queue. In the H/W event priority scheduling, if an H/W event is stored in the H/W event queue, it is executed with priority over a drawing request from the client. On the other hand, if there is not stored an H/W event in the H/W event queue, the client request is sequentially executed and stored in the server queue irrespective of the operation state of the drawing process by the graphics processor. The characteristic feature of this invention is that without immediately executing a drawing request from the client even if there is no event in the H/W event queue and so there is no need of the priority processing of an H/W event, the operation state of the graphics device processor is monitored, and in accordance with the monitor results a client request is processed. Accordingly, a number of commands will not be stored in the server queue which otherwise delay the real time processing of an H/W event, thereby improving the real time processing of an H/W event.

Fig. 12B shows another embodiment of the WaitForSomething (). At step S1, using the QSpace (), the Head and Tail addresses are received from the graphics command buffer. At step S2, it is checked if Head ≠ Tail. If Head ≠ Tail, the service request is immediately executed at step S5. If Head = Tail, the flow loops until it becomes Head = Tail, and thereafter enters step S5.

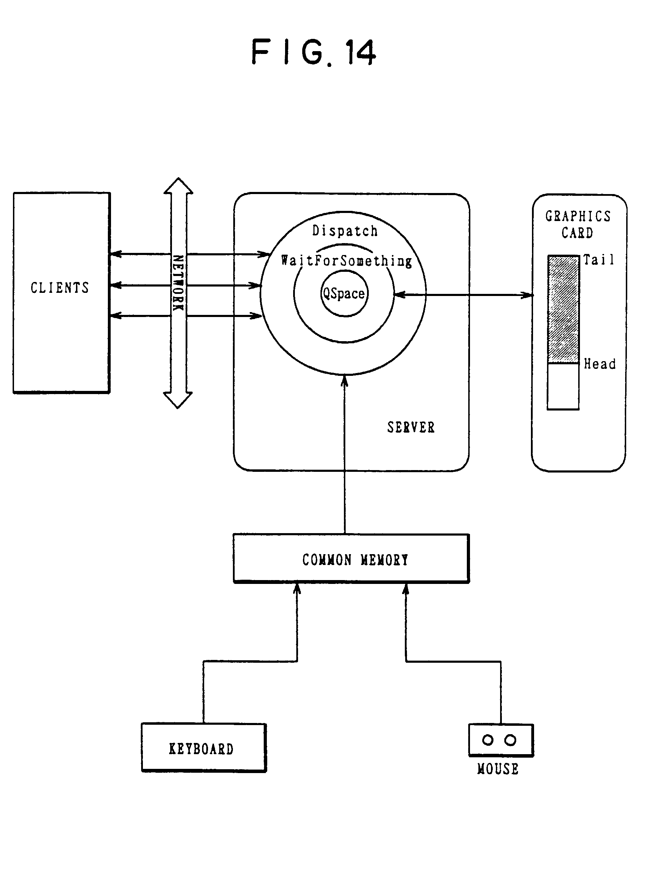

Fig. 14 shows the concept of the layer structure of scheduling according to the present invention. The Dispatch is present in the DIX layer which is the outermost shell of the server, and directly communicates with the client and H/W device for the scheduling which is independent from the H/W device and OS. The WaitForSomething () is present in the OS layer and called from the Dispatch () for the processing of a service request dependent on OS. The QSpace () is present in the innermost shell and called from the WaitForSomething (), and directly accesses the graphics device to monitor it.

Command Data Transfer from Server Queue to Graphics Command Queue

The command data in the server queue 105 is developed into a basic graphics function by a Host Dispatcher at the server side (host side), and transferred to the graphics command buffer 106 at the graphics device side (remote side) by a BeginCommand (). The command developed in the graphics command buffer 106 is read by a GetCommand () at the remote side and developed into a graphics processor function corresponding to the Host dispatcher by a Remote Dispatcher to execute a predetermined drawing process for VRAM.

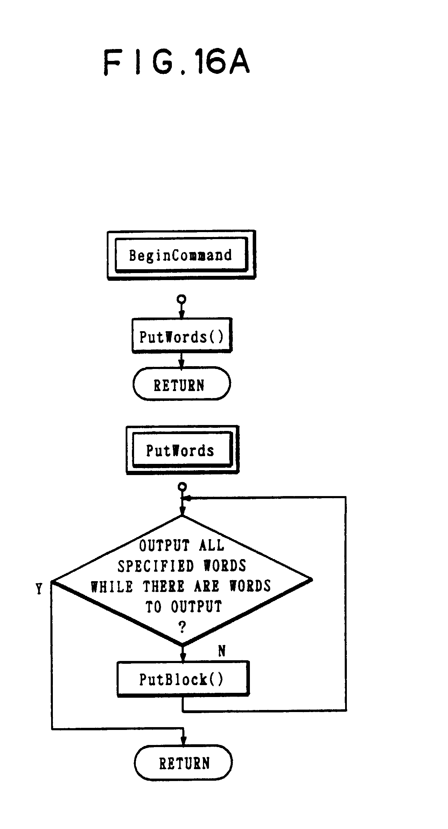

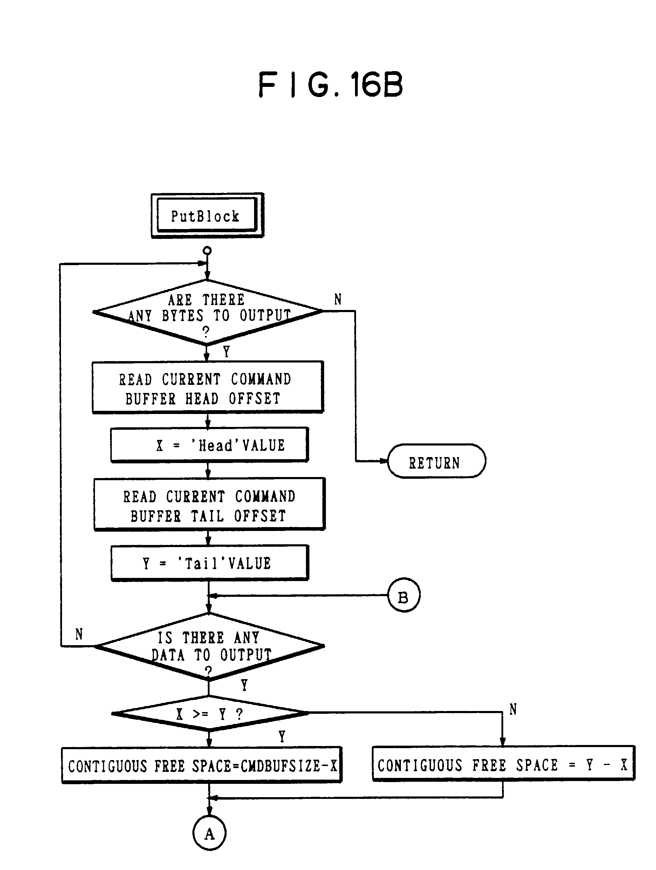

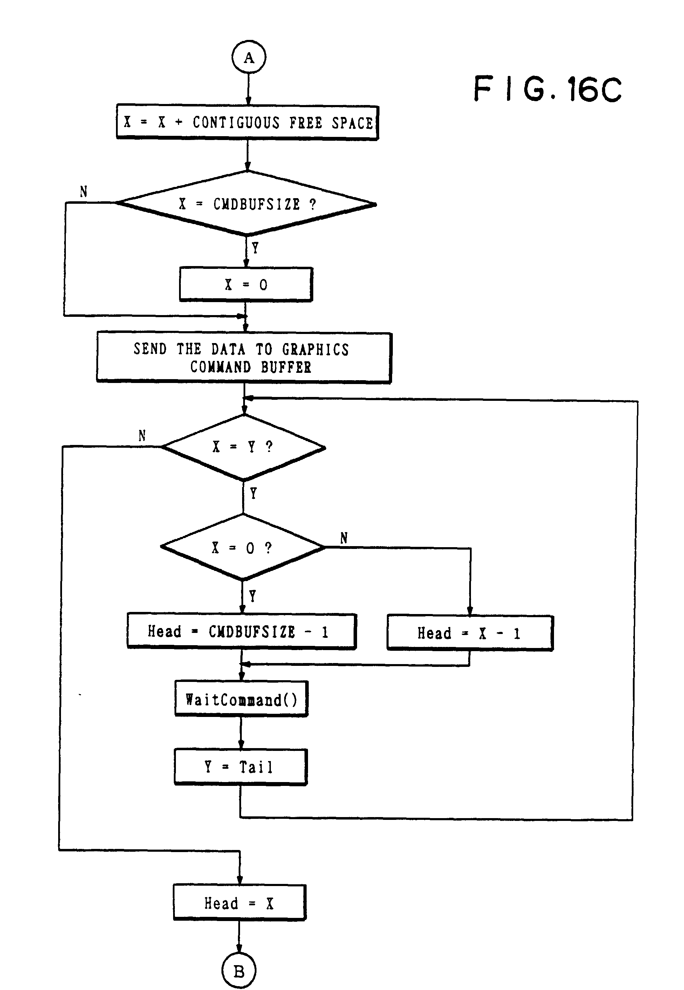

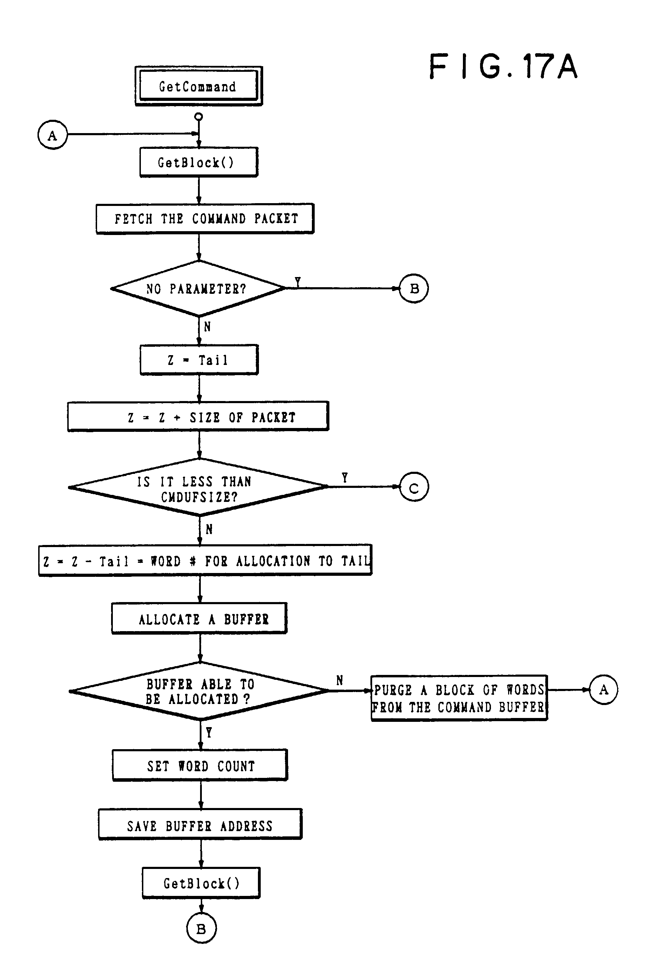

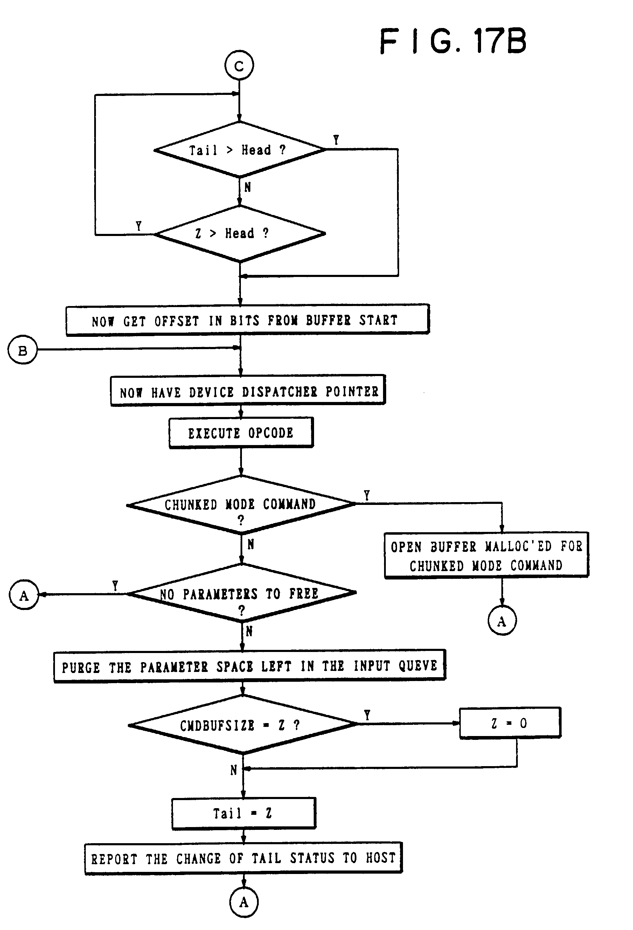

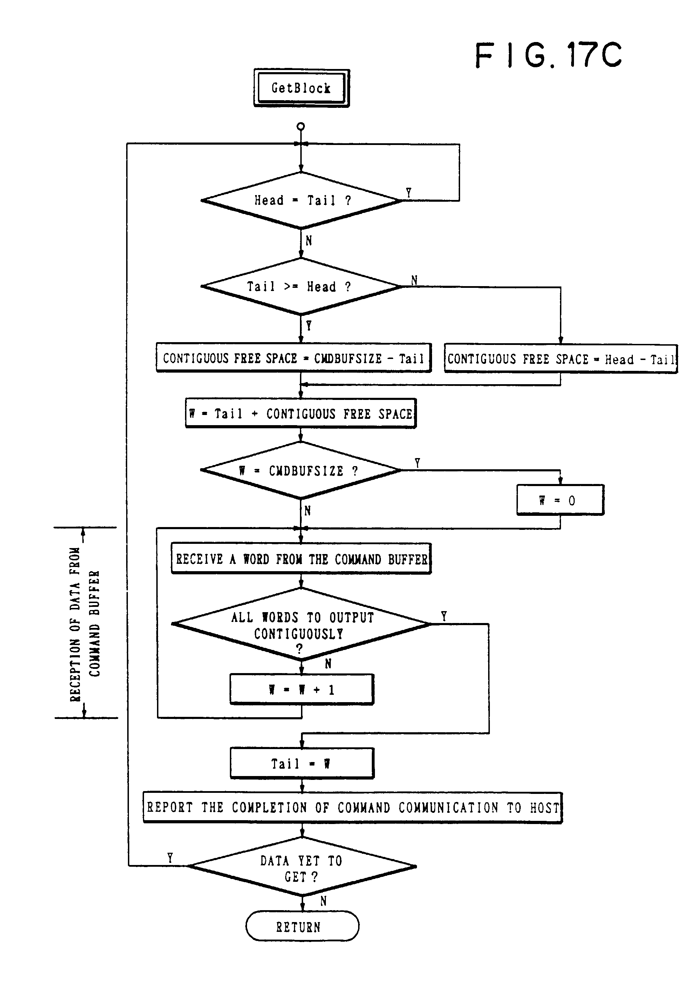

Figs. 16A to 16C give an outline of the BeginCommand () at the host side, and Figs. 17A to 17C give an outline of the GetCommand () at the remote side, with communication and management of the graphics command buffer 106 being mainly illustrated. Variable X and Y shown in Fig. 16 and variables Z and Y shown in Fig. 17 take optional values, and Head and Tail represent the head and tail addresses of a command data storage area of the graphics command buffer 106. The BeginCommand () corresponds to the transfer flow of a graphics command sent from the host side server queue 105, and the GetCommand () corresponds to the command reception and execution flow at the remote side. Both the transmission and reception sides are synchronized at the start and end times of transmission/reception. This synchronization is carried out because the remote side is a single processor and a plurality of independent scans (refresh) cannot be performed at a time for the display device. In accordance with a graphics command to be sent from the host side server queue 105, the Host Dispatcher sends a certain unit of basic graphics function group to a PutWords () function. The detail of a PutBlock () function is given in Figs. 16B and 16C.

The PutBlock () reads the current Head and Tail values of the command buffer 106, stores them in variables X and Y, and calculates the contiguous free space. After the graphics command buffer 106 is subjected to a specific process, the data is transferred thereto. In order to check the transfer end timing, the WaitCommand () function waits for a reception end acknowledgement from the remote side. Thereafter, the new Head position of the graphics command buffer 106 is set to then wait for the next data transfer. After transferring all data, the PutBlock () is terminated, and the PutWords () and BeginCommand () are also terminated.

With the GetCommand () at the remote side, the capture of a data area in the buffer is processed in a different manner as the type of command changes as shown in Fig. 17A (monolithic command (a single and simple command without parameter) or chunked command (command with a plurality of parameters)). In both the cases, the GetBlock () shown in Fig. 17C stores (receives) a command data from the host side in the command buffer 106. Thereafter, as shown in Fig. 17B, using the Head and Tail values of the command queue 105, the command data is read and executed. The internal operation of the GetBlock () is shown in Fig. 17C. It is first checked if the values of Head and Tail are different. If all commands from the remote side have been executed, then Head = Tail. If the host side transfers a new command thereafter, the Head value is updated as shown in Fig. 16C so that it becomes Head = Tail. Checking the Head and Tail values is performed from another reason that the host side and remote side enter an independent and asynchronous operation except during the data communication so that it is necessary to check the state of the host side at the time of data reception.

The data size is calculated basing upon the read Head and Tail values, a wrap process is performed to receive the data from the host side, and the Tail is updated and such effect is informed to the Host side. This information is used for the discrimination of a busy state of the remote side when the host side transfers a command data to the remote side. When a response from the remote side is received, it is discriminated that the remote side is in an idle state and then the transfer starts.

In the above manner, "Head" is updated by the host side BeginCommand, and "Tail" is updated by the remote side GetCommand such that the host and remote sides basically perform asynchronous execution and they are synchronized when data is transferred therebetween.

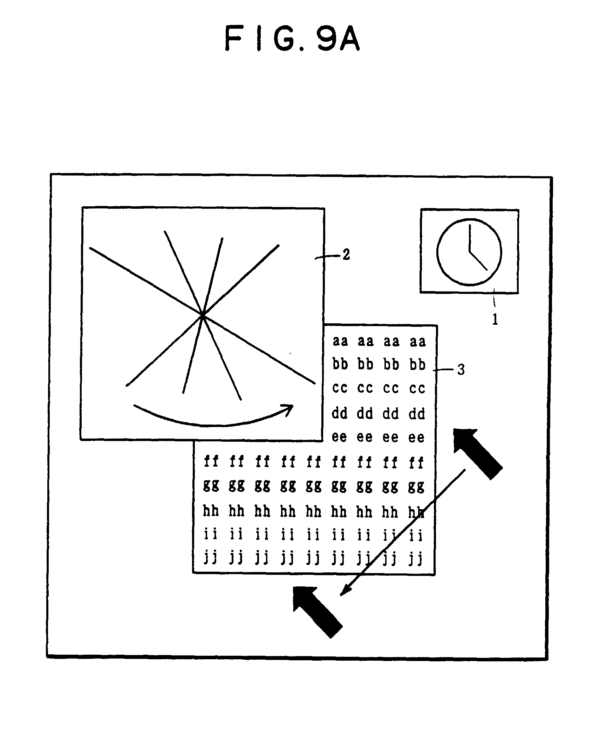

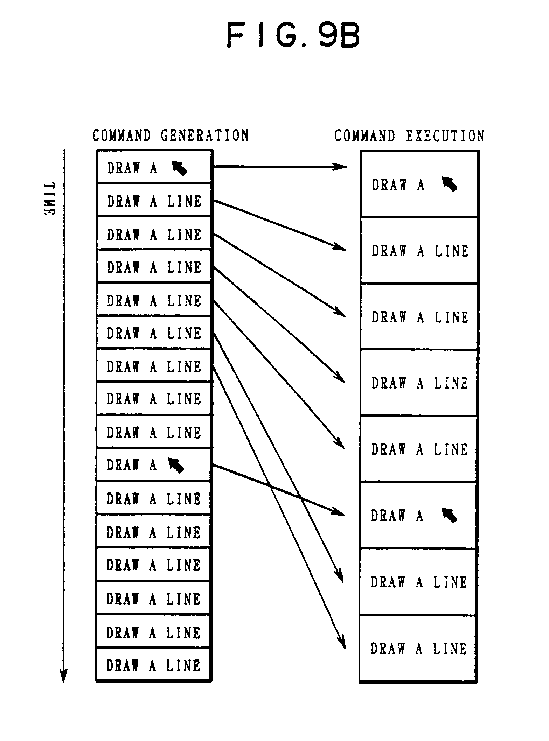

Figs. 9A and 9B show an example of a display status according to the embodiment of this invention. Fig. 9A shows three windows similar to those shown in Fig. 8A. The left side of Fig. 9B shows a sequence of graphics commands generated at the host side, and the right side shows a sequence of executions of the generated commands. It is to be noted that a command for drawing a mouse cursor font is executed not in the order of command generation. Although the commands with oblique lines are already present in the client queue before the drawing command for the second mouse cursor font, according to this invention they are not sent to the server queue before the occurrence of the second mouse event without executing the scheduling for the commands by the WaitForSomething () routine including the QSpace (). The mouse event as an H/W event is executed and scheduled with priority over other requests stored in the client queue, and the drawing command for the mouse event is sent to the server queue and executed.

Another Embodiment

In the above embodiment, there has been described an example of client scheduling with respect to the server queue while mainly paying attention to the H/W event. It is apparent that the client queue itself may be scheduled in accordance with the QSpace (), i.e., in accordance with the execution status at the graphics side. For example, the flow at step S2 shown in Fig. 6 may be changed by calling the QSpace () before or after the process by the WriteToClient event function to monitor the execution status of the buffer at the remote side. Such a change may be executed at another step in Fig. 6. At what step the QSpace () is called and what process is to be executed, depend on the system concerned.

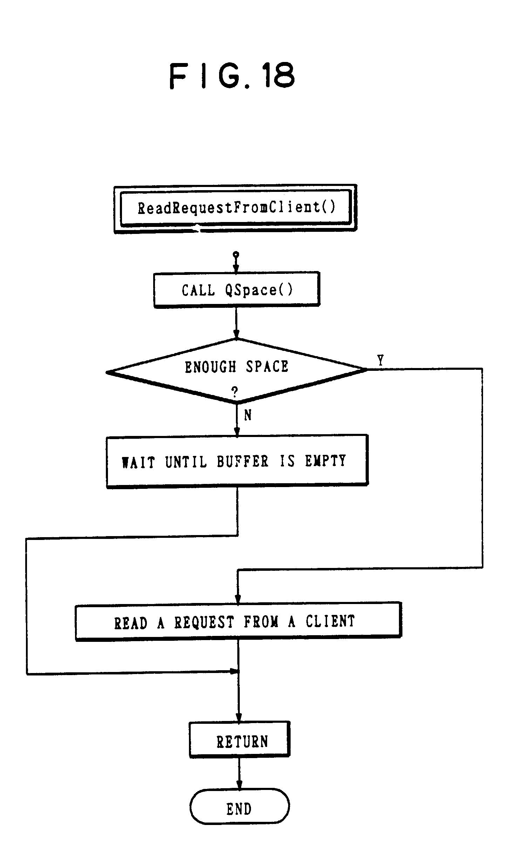

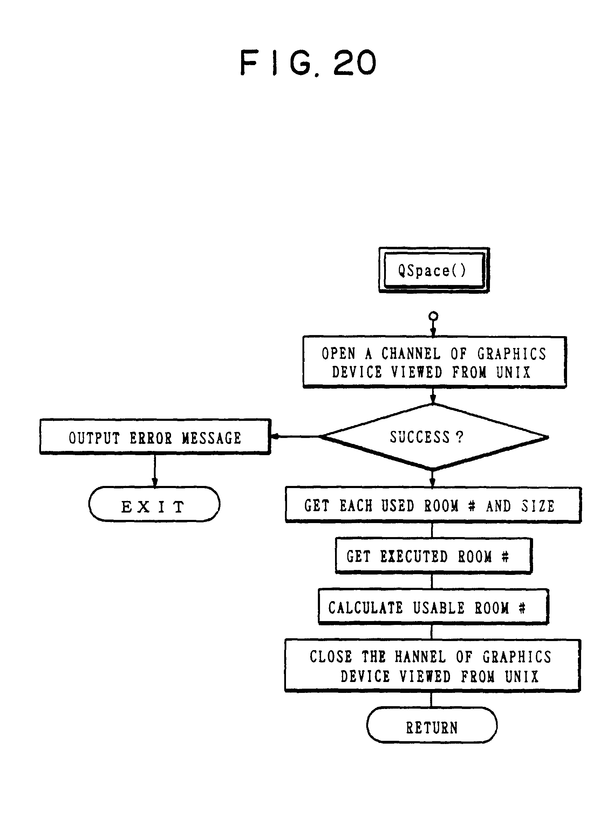

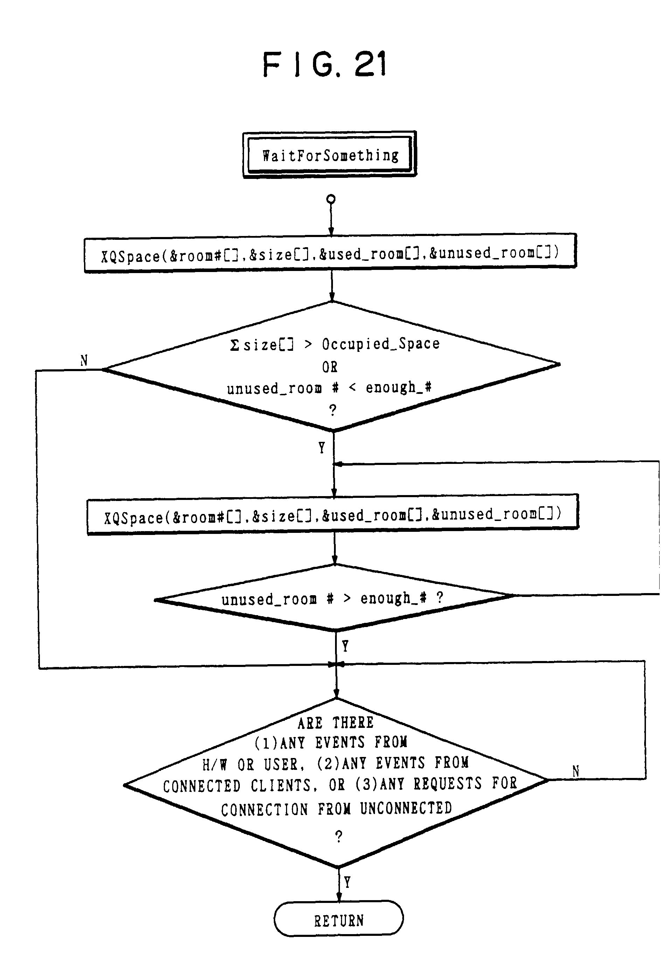

Furthermore, the present invention is not limited to the structure of the graphics command buffer 106 and the management method thereof at the remote side. But, the invention is applicable to the arrangement only if it can obtain the information by which the execution status of the graphics device side can be monitored. For example, there will be given another method wherein each command is provided with an optional length buffer instead of the fixed size buffer, a number is allocated to each command without managing it by the Head and Tail, and in accordance with this number the execution status is managed. Fig. 18 shows a buffer having four pointers to storage areas of commands. Pointers rooms #1 to #4 store three different commands (opcodes) and data necessary for executing them, the storage area and sizes thereof being stored in rooms #1 to #3. It is assumed that as the execution progresses, the command in room #1 has been executed already and the command in room #2 is now being executed. In this case, the QSpace () monitors the number # and size as illustrated in Fig. 20. The WaitForSomething () function using the QSpace () function (for X-window, XQSpace ()) is illustrated in Fig. 21. The EXIT condition from the loop of the QSpace () function depends on the number # and size instead of the Head and Tail values. The fundamental algorithm and effects are the same as the first-described embodiment.

## Claims

1. A data processing apparatus comprising:

   a host processor including multitasking means (OS) for executing a plurality of processes in a time sharing manner and scheduling means for scheduling drawing requests generated in parallel from the plurality of processes and forming the drawing requests into a single sequence of drawing commands, said multitasking means (OS) and said scheduling means being connected to interact logically;
   a graphics device (20; 60) for controlling a display device (60) to draw a picture in accordance with a predetermined unit of drawing commands transferred from the single sequence in said scheduling means;
   wherein said scheduling means monitors an execution status of the predetermined unit of drawing commands at the graphics device (20; 60), and reserves the scheduling of the drawing request from each of the processes until the predetermined unit of drawing commands has been executed at the graphics device (20; 60); and
   said drawing requests from the plurality of processes include a drawing request related to a hardware event and said scheduling means schedules the drawing request related to the hardware event with priority over other requests.

2. A data processing apparatus according to claim 1, wherein said hardware event is generated in response to an operation of a keyboard, a mouse, a light pen, a touch screen or a track ball.

3. A data processing apparatus according to claim 1, wherein said scheduling means provides a multi-window function on a single screen of said graphics device (20; 60).

4. A data processing apparatus according to claim 1, wherein said display device (60) is a ferroelectric liquid crystal display panel.

5. A data processing apparatus according to claim 1, wherein

   said host processor runs a process of generating said drawing command and transferring said generated drawing command to said graphics device (20; 60);
   said host processor monitors a drawing request and a hardware event from said running process to said graphics device (20; 60), sequentially registers said drawing command generated in response to said monitored drawing request in a first queue (105) or executes said monitored hardware event; and
   said host processor monitors the execution status of said drawing command transferred to said graphics device (20; 60), and controls the registration of said generated drawing command in said first queue (105) in accordance with said execution status.

6. A data processing apparatus according to claim 5, wherein said host processor suspends to monitor said drawing request to said graphics device (20; 60) until the execution of said drawing command transferred to said graphics device (20; 60) reaches a predetermined stage.

7. A data processing apparatus according to claim 6, further comprising a buffer (106) for storing said drawing command transferred to said graphics device (20; 60), wherein said drawing request transferred to said graphics device (20; 60) starts to be monitored when the amount of unexecuted commands in said buffer (106) becomes equal to or smaller than a predetermined amount.

8. A data processing apparatus according to claim 6, further comprising a buffer (106) for storing said drawing command transferred to said graphics device (20; 60), wherein said drawing command starts to be monitored when it is judged that there is no unexecuted command in said buffer (106) or that there is a free space for storing the next command.

9. A data processing apparatus according to any of the claims 5 to 8, wherein said host processor registers said generated drawing command in a second queue (101 to 103) provided for each drawing generation process, controls registered drawing commands in said second queue (101 to 103) as a single sequence, and stores said registered drawing commands in said first queue (105).

10. A data processing apparatus according to claim 1, wherein

said graphics device (20; 60) comprises a display panel (60) and a local processor (20) for driving said display panel (60) in accordance with a drawing command;
said apparatus further comprises a user operation device for generating a hardware event; and
said host processor comprises client execution means for running a drawing process and server means for scheduling of monitoring a drawing request from said process and said hardware event, transferring said drawing command to said local processor (20) in response to said drawing request, and informing said process of said hardware event in response to said hardware event.

11. A data processing apparatus according to claim 10, wherein said server means provides to said local processor (20) said drawing command for forming multi-windows on said display panel (60).

**Patentansprüche**

1. Datenverarbeitungsvorrichtung mit:

einem Hostprozessor mit einer Multitaskingeinrichtung (**OS**) zum Ausführen einer Vielzahl von Prozessen in zeitverschachtelter Weise und einer Planungseinrichtung zum Planen von durch die Vielzahl von Prozessen parallel erzeugten Zeichenanforderungen und zum Bilden einer einzelnen Sequenz aus Zeichenbefehlen aus den Zeichenanforderungen, wobei die Multitaskingeinrichtung (**OS**) und die Planungseinrichtung zur logischen Interaktion miteinander verbunden sind;
eine Graphikvorrichtung (**20; 60**) zum Steuern einer Anzeigevorrichtung (**60**) zum Zeichnen eines Bildes entsprechend einer vorbestimmten Einheit von Zeichenbefehlen, die von der in der Planungseinrichtung vorhandenen einzelnen Sequenz übertragen werden;
wobei die Planungseinrichtung einen Ausführungsstatus der vorbestimmten Einheit von Zeichenbefehlen an der Graphikvorrichtung (**20; 60**) überwacht, und die Planung der Zeichenanforderung von jedem der Prozesse solange reserviert, bis die vorbestimmte Einheit von Zeichenbefehlen an der Graphikvorrichtung (**20; 60**) ausgeführt wurde; und
wobei die Zeichenanforderungen der Vielzahl von Prozessen eine auf ein Hardwareereignis bezogene Zeichenanforderung umfassen und die Planungseinrichtung die auf das Hardwareereignis bezogene Zeichenanforderung vorrangig gegenüber anderen Anforderungen einplant.

2. Datenverarbeitungsvorrichtung nach Anspruch 1, wobei das Hardwareereignis im Ansprechen auf eine Betätigung einer Tastatur, einer Maus, eines Lichtgriffels, eines Berührbildschirms oder eines Trackballs erzeugt.

3. Datenverarbeitungsvorrichtung nach Anspruch 1, wobei die Planungseinrichtung eine Mehrfachfensterfunktion auf einem einzelnen Bildschirm der Graphikvorrichtung (**20; 60**) bereitstellt.

4. Datenverarbeitungsvorrichtung nach Anspruch 1, wobei die Anzeigevorrichtung (**60**) ein ferroelektrisches Flüssigkristallanzeigefeld ist.

**5.** Datenverarbeitungsvorrichtung nach Anspruch 1, wobei

der Hostprozessor einen Prozeß zum Erzeugen des Zeichenbefehls und Übertragen des erzeugten Zeichenbefehls zu der Graphikvorrichtung (**20; 60**) durchführt;
der Hostprozessor eine Zeichenanforderung und ein Hardwareereignis von dem ablaufenden Prozeß zu der Graphikvorrichtung (**20; 60**) überwacht, den im Ansprechen auf die überwachte Zeichenanforderung erzeugten Zeichenbefehl in einer ersten Warteschlange (**105**) aufeinanderfolgend einträgt oder das überwachte Hardwareereignis ausführt; und
der Hostprozessor den Ausführungsstatus des zu der Graphikvorrichtung (**20; 60**) übertragenen Zeichenbefehls überwacht, und die Eintragung des erzeugten Zeichenbefehls in die erste Warteschlange (**105**) entsprechend dem Ausführungsstatus steuert.

**6.** Datenverarbeitungsvorrichtung nach Anspruch 5, wobei der Hostprozessor das Überwachen der Zeichenanforderung zu der Graphikvorrichtung (**20; 60**) einstellt, bis die Ausführung des zu der Graphikvorrichtung (**20; 60**) übertragenen Zeichenbefehls eine vorbestimmte Stufe erreicht hat.

**7.** Datenverarbeitungsvorrichtung nach Anspruch 6, weiterhin umfassend einen Puffer (**106**) zum Speichern des zu der Graphikvorrichtung (**20; 60**) übertragenen Zeichenbefehls, wobei die Überwachung der zu der Graphikvorrichtung (**20; 60**) übertragenen Zeichenanforderung beginnt, wenn die Menge unausgeführter Befehle in dem Puffer (**106**) kleiner oder gleich einer vorbestimmten Menge ist.

**8.** Datenverarbeitungsvorrichtung nach Anspruch 6, weiterhin umfassend einen Puffer (**106**) zum Speichern des zu der Graphikvorrichtung (**20; 60**) übertragenen Zeichenbefehls, wobei die Überwachung des Zeichenbefehls beginnt, wenn beurteilt wird, daß kein unausgeführter Befehl in dem Puffer (**106**) vorhanden ist, oder daß freier Raum zum Speichern des nächsten Befehls vorhanden ist.

**9.** Datenverarbeitungsvorrichtung nach einem der Ansprüche 5 bis 8, wobei der Hostprozessor den erzeugten Zeichenbefehl in einer für jeden Zeichnungserzeugungsprozeß vorgesehenen zweiten Warteschlange (**101 bis 103**) einträgt, in der zweiten Warteschlange (**101 bis 103**) eingetragene Zeichenbefehle als eine einzelne Sequenz steuert, und die eingetragenen Zeichenbefehle in der ersten Warteschlange (**105**) speichert.

**10.** Datenverarbeitungsvorrichtung nach Anspruch 1, wobei

die Graphikvorrichtung (**20; 60**) ein Anzeigefeld (**60**) umfaßt und einen lokalen Prozessor (**20**) zum Ansteuern des Anzeigefelds (**60**) entsprechend einem Zeichenbefehl;
die Vorrichtung weiterhin umfaßt eine Anwenderbedienungsvorrichtung zum Erzeugen eines Hardwareereignisses, und
der Hostprozessor eine Clientausführungseinrichtung aufweist zum Ausführen eines Zeichenprozesses und eine Servereinrichtung zum Planen einer Überwachung einer Zeichenanforderung des Prozesses und des Hardwareereignisses, Übertragen des Zeichenbefehls zu dem lokalen Prozessor (**20**) im Ansprechen auf die Zeichenanforderung, und Informieren des Prozesses von dem Hardwareereignis im Ansprechen auf das Hardwareereignis.

**11.** Datenverarbeitungsvorrichtung nach Anspruch 10, wobei die Servereinrichtung dem lokalen Prozessor (**20**) den Zeichenbefehl zum Erzeugen von Mehrfachfenstern auf dem Anzeigefeld (**60**) zuführt.

**Revendications**

**1.** Appareil de traitement de données comprenant :

un processeur hôte comportant un moyen multitâche (OS : Système d'Exploitation) pour exécuter une pluralité de traitements en temps partagé et un moyen d'ordonnancement pour ordonnancer des requêtes de dessin générées en parallèle à partir de la pluralité de traitements et former les requêtes de dessin en une séquence unique de commandes de dessin, ledit moyen multitâche (OS : Système d'Exploitation) et ledit moyen d'ordonnancement étant connectés pour interagir de manière logique;

un dispositif graphique (20 ; 60) pour commander un dispositif d'affichage (60) afin de dessiner une image en conformité avec une unité prédéterminée de commandes de dessin transférées à partir de la séquence unique dans ledit moyen d'ordonnancement;

dans lequel ledit moyen d'ordonnancement contrôle un état d'exécution de ladite unité prédéterminée de commandes de dessin au dispositif graphique (20 ; 60), et préserve l'ordonnancement de la requête de dessin de chacun des traitements jusqu'à ce que l'unité prédéterminée de commandes de dessin ait été exécutée au dispositif graphique (20 ; 60) ; et

lesdites requêtes de dessin provenant de la pluralité de traitements comportent une requête de dessin se rapportant à un événement matériel et ledit moyen d'ordonnancement ordonnance la requête de dessin se rapportant à l'événement matériel en priorité par rapport aux autres requêtes.

2. Appareil de traitement de données selon la revendication 1, dans lequel ledit événement matériel est généré en réponse à une action sur un clavier, une souris, un crayon optique, un écran tactile ou une boule de commande.

3. Appareil de traitement de données selon la revendication 1, dans lequel ledit moyen d'ordonnancement fournit une fonction de multi-fenêtrage sur un écran unique dudit dispositif graphique (20 ; 60).

4. Appareil de traitement de données selon la revendication 1, dans lequel ledit dispositif d'affichage (60) est un panneau d'affichage à cristaux liquides ferroélectriques.

5. Appareil de traitement de données selon la revendication 1, dans lequel

ledit processeur hôte exécute un traitement consistant à générer ladite commande de dessin et à transférer la commande de dessin générée vers ledit dispositif graphique (20 ; 60) ;

ledit processeur hôte contrôle une requête de dessin et un événement matériel à partir dudit traitement en exécution vers ledit dispositif graphique (20 ; 60), enregistre séquentiellement ladite commande de dessin générée en réponse à ladite requête de dessin contrôlée dans une première file d'attente (105) ou exécute ledit événement matériel contrôlé ; et

ledit processeur hôte contrôle l'état d'exécution de ladite commande de dessin transférée audit dispositif graphique (20 ; 60), et commande l'enregistrement de ladite commande de dessin générée dans ladite première file d'attente (105) en conformité avec ledit état d'exécution.

6. Appareil de traitement de données selon la revendication 5, dans lequel ledit processeur hôte suspend le contrôle de ladite requête de dessin audit dispositif graphique (20 ; 60) jusqu'à ce que l'exécution de ladite commande de dessin transférée audit dispositif graphique atteigne un stade prédéterminé.

7. Appareil de traitement de données selon la revendication 6, comprenant de plus un tampon (106) pour stocker ladite commande de dessin transférée audit dispositif graphique (20 ; 60), dans lequel ladite requête de dessin transférée audit dispositif graphique (20 ; 60) commence à être contrôlée lorsque la quantité de commandes non exécutées dans ledit tampon (106) devient égale ou inférieure à une quantité prédéterminée.

8. Appareil de traitement de données selon la revendication 6, comprenant de plus un tampon (106) pour stocker ladite commande de dessin transférée audit dispositif graphique (20 ; 60), dans lequel ladite commande de dessin commence à être contrôlée lorsqu'il est jugé qu'il n'y a aucune commande non exécutée dans ledit tampon (106) ou qu'il y a un espace libre pour stocker la commande suivante.

9. Appareil de traitement de données selon l'une quelconque des revendications précédentes, dans lequel ledit processeur hôte enregistre ladite commande de dessin générée dans une seconde file d'attente (101 à 103) prévue pour chaque traitement de génération de dessin, contrôle les commandes de dessin enregistrées dans ladite seconde file d'attente (101 à 103) sous forme d'une séquence unique, et stocke lesdites commandes de dessin enregistrées dans ladite première file d'attente (105).

10. Appareil de traitement de données selon la revendication 1, dans lequel

ledit dispositif graphique (20 ; 60) comprend un panneau d'affichage (60) et un processeur local (20) pour piloter ledit panneau d'affichage (60) en fonction d'une commande de dessin ;

ledit appareil comprenant de plus un dispositif mis en oeuvre par l'utilisateur pour générer un événement matériel ; et

ledit processeur hôte comprend un moyen d'exécution client pour exécuter un traitement de dessin et un moyen serveur pour ordonnancer le contrôle d'une requête de dessin à partir dudit traitement et dudit événement matériel, transférer ladite commande de dessin audit processeur local (20) en réponse à ladite requête de dessin, et informer ledit traitement dudit événement matériel en réponse audit événement matériel.

11. Appareil de traitement de données selon la revendication 10, dans lequel ledit moyen serveur fournit audit processeur local (20) ladite commande de dessin pour former des fenêtres multiples sur ledit panneau d'affichage (60).

# FIG.1

HOST

OS

GRAPHICS CARD

GRAPHICS CONTROLLER

DRIVE IC

FLCD PANEL

DRIVE IC

AT BUS INTERFACE

GRAPHICS DEVICE

# FIG.2

DATA ELECTRODE DRIVE CIRCUIT

PD0-PD7

LINE BUFFER → SHIFT REGISTER ~72

64

CONTROL CIRCUIT 68

70

LINE BUFFER ~74

AH/DL

MPU 89

DATA ELECTRODE DRIVER ~76

HSYNC

82

ADDRESS DETECTION CIRCUIT ~88

DECODER 78

LINE ADDRESS MEMORY 80

SCAN ELECTRODE DRIVER

FLCD DISPLAY PANEL

62 — SCAN ELECTRODE DRIVE CIRCUIT

60

EP 0 438 152 B1

FIG.3

# FIG. 4

HOST 0

SERVER

CLIENT

X lib

X PROTOCOL

HOST 1

CLIENT

X lib

NETWORK

X PROTOCOL

# FIG. 5

NETWORK

FONT
FILE

OS
FONT
INFORMATION

WRITE

COMMUNICATION
TO CLIENT

EVENT

EVENT
INFORMATION

WRITE REQUEST
FROM CLIENT

EVENT

WRITE
REQUEST

DIX

DDX

# F I G . 6

Dispatch

STEP 1

Y ─ H/W EVENT CHECK
(COMPARISON BETWEEN TWO POINTERS)

N                                                              STEP 3

WaitForSomething()

STEP 4

REQUEST FROM CLIENT

ReadRequestFromClient()

EXECUTE

CONNECTION REQUEST ─

STEP 5

EXECUTE

WriteToClient()
[CONNECTION REQUEST]

EVENT ─

EXECUTE

STEP 2

WriteToClient() [EVENT]

◄──────── DIX + DDX ────────►◄─          OS LAYER ──────────►

# F I G. 7

APPLICATION

X l i b

X PROTOCOL

D I X                    Dispatch()

D D X          O S        WaitForSomething()

CLIENT

SERVER

# F I G. 8A

EP 0 438 152 B1

# F I G. 8B

# FIG. 9A

# F I G. 9B

COMMAND GENERATION         COMMAND EXECUTION

TIME

| COMMAND GENERATION | COMMAND EXECUTION |
|---|---|
| DRAW A | DRAW A |
| DRAW A LINE | DRAW A LINE |
| DRAW A LINE | DRAW A LINE |
| DRAW A LINE | DRAW A LINE |
| DRAW A LINE | DRAW A LINE |
| DRAW A LINE | DRAW A |
| DRAW A LINE | DRAW A LINE |
| DRAW A LINE | DRAW A LINE |
| DRAW A LINE | |
| DRAW A | |
| DRAW A LINE | |
| DRAW A LINE | |
| DRAW A LINE | |
| DRAW A LINE | |
| DRAW A LINE | |
| DRAW A LINE | |

# FIG. 10

CLIENT 1 QUEUE
101

CLIENT 2 QUEUE
102

CLIENT 3 QUEUE
103

NETWORK

104

105

LOW

HIGH

TAIL

FLCD CONTROLLER

HEAD

106

CLIENT ——— SERVER

GRAPHICS CARD

H/W EVENT QUEUE

CMDBUFSIZE 0 1 2

(a)

Tail
Head    Head-1

0

(b)

Head=Tail

0

(c)

Head

Tail

0

(d)

Tail    Head

EP 0 438 152 B1

# F I G.11

```
┌─────────────────┐
│ ┌─────────────┐ │
│ │   QSpace    │ │
│ └─────────────┘ │
└─────────────────┘
```

OPEN A CHANNEL OF GRAPHICS DEVICE
VIEWED FROM UNIX

SUCCESS
?

NO

PRINT AN ERROR MESSAGE

EXIT

YES

GET HEAD DATA

GET TAIL DATA

Head > Tail
?

NO

CONTIGUOUS FREE SPACE = Tail − Head

YES

CONTIGUOUS FREE SPACE = CMDBUFSIZE − Head

CLOSE THE CHANNEL OF GRAPHICS DEVICE
VIEWED FROM UNIX

RETURN

# F I G. 12A

WaitForSomething

XQSpace (&Head&Tail&ContiguousSpace) —S1

Head ≠ Tail
ALSO
CONTIGUOUS FREE SPACE
< PART_QUE
?
— S2

NO

YES

XQSpace (&Head&Tail&ConiguousSpace) — S3

Head = Tail ? — S4

NO

YES

ARE THERE
(1)ANY EVENTS FROM
H/W OR USER, (2)ANY EVENTS FROM
CONNECTED CLIENTS, OR (3)ANY REQUESTS FOR
CONNECTION FROM UNCONNECTED
?
— S5

NO

YES

RETURN

B

30

# F I G. 12B

WaitForSomething

XQSpace (&Head&Tail&ContiguousSpace) — S1

Head ≠ Tail — S2

NO

YES

XQSpace (&Head&Tail&ConiguousSpace) — S3

Head = Tail ? — S4

NO

YES

ARE THERE
(1)ANY EVENTS FROM
H/W OR USER, (2)ANY EVENTS FROM
CONNECTED CLIENTS, OR (3)ANY REQUESTS FOR
CONNECTION FROM UNCONNECTED
? — S5

NO

YES

RETURN — B

FIG.13

EP 0 438 152 B1

# F I G. 14

CLIENTS

NETWORK

Dispatch

WaitForSomething

QSpace

SERVER

GRAPHICS CARD

Tail

Head

COMMON MEMORY

KEYBOARD

MOUSE

33

EP 0 438 152 B1

# F I G. 15A

ADDRESS
Low

Tail

Head

CONTIGUOUS
FREE SPACE

High

( a )

Head=Tail

( b )

Tail

Head

( c )

Head=Tail

( d )

Head

Tail

( e )

# F I G . 15B

CMDBUFSIZE = 6144
Part - Que = 4096

| Head | ⋛ | Tail | UPPER CONTIGUOUS FREE SPACE |
|---|---|---|---|
| 586 | = | 586 | 5558 (CMDBUFSIZE - Head) |
| 5124 | > | 4515 | 1020 (CMDBUFSIZE - Head) |
| 5758 | > | 5149 | 386 (CMDBUFSIZE - Head) |
| 198 | < | 5783 | 5585 (Tail - Head) |
| 1024 | > | 407 | 5120 (CMDBUFSIZE - Head) |
| 2992 | > | 2421 | 3152 (CMDBUFSIZE - Head) |
| 202 | < | 5737 | 5535 (Tail - Head) |

# F I G. 16A

```
┌─────────────────────┐
│ ┌─────────────────┐ │
│ │  BeginCommand   │ │
│ └─────────────────┘ │
└─────────────────────┘
           │
           ○
           ↓
   ┌──────────────┐
   │  PutWords()  │
   └──────────────┘
           │
           ↓
    ( RETURN )


   ┌───────────────────┐
   │ ┌───────────────┐ │
   │ │   PutWords    │ │
   │ └───────────────┘ │
   └───────────────────┘
           │
           ○
           ↓
        ╱╲
       ╱    ╲
      ╱ OUTPUT ALL ╲
  Y  ╱ SPECIFIED WORDS ╲
◄───╱ WHILE THERE ARE WORDS ╲
     ╲    TO OUTPUT    ╱
      ╲      ?       ╱
       ╲          ╱
         ╲      ╱
           ╲  ╱
            │  N
            ↓
   ┌──────────────┐
   │  PutBlock()  │
   └──────────────┘
            │
            ↓
    ( RETURN )
```

# F I G. 16B

F I G. 16C

A

X = X + CONTIGUOUS FREE SPACE

X = CMDBUFSIZE ? — N

Y

X = 0

SEND THE DATA TO GRAPHICS
COMMAND BUFFER

X = Y ? — N

Y

X = 0 ? — N

Y

Head = CMDBUFSIZE - 1          Head = X - 1

WaitCommand()

Y = Tail

Head = X

B

# F I G. 17A

```
          ┌─────────────────┐
          │   GetCommand    │
          └─────────────────┘
                   │
    ┌───┐          ○
    │ A │─────────────┐
    └───┘             │
                ┌──────────────┐
                │  GetBlock()  │
                └──────────────┘
                      │
          ┌───────────────────────────┐
          │  FETCH THE COMMAND PACKET  │
          └───────────────────────────┘
                      │
                  ◇ NO PARAMETER? ◇────Y────┐ B
                      │ N
                ┌──────────────┐
                │   Z = Tail   │
                └──────────────┘
                      │
          ┌───────────────────────────┐
          │   Z = Z + SIZE OF PACKET   │
          └───────────────────────────┘
                      │
              ◇ IS IT LESS THAN ◇────Y────┐ C
                 CMDUFSIZE?
                      │ N
    ┌───────────────────────────────────────────────────┐
    │ Z = Z - Tail = WORD # FOR ALLOCATION TO TAIL       │
    └───────────────────────────────────────────────────┘
                      │
              ┌────────────────────┐
              │  ALLOCATE A BUFFER  │
              └────────────────────┘
                      │
              ◇ BUFFER ABLE TO ◇────N────┐  ┌──────────────────────────┐
                BE ALLOCATED ?           └─▶│ PURGE A BLOCK OF WORDS    │──── A
                      │ Y                    │ FROM THE COMMAND BUFFER   │
              ┌────────────────────┐         └──────────────────────────┘
              │   SET WORD COUNT   │
              └────────────────────┘
                      │
              ┌────────────────────┐
              │ SAVE BUFFER ADDRESS │
              └────────────────────┘
                      │
              ┌────────────────────┐
              │     GetBlock()     │
              └────────────────────┘
                      │
                    ( B )
```

# F I G. 17B

C

Tail > Head ? —Y→

N

Z > Head ? —Y→

N

NOW GET OFFSET IN BITS FROM BUFFER START

B

NOW HAVE DEVICE DISPATCHER POINTER

EXECUTE OPCODE

CHUNKED MODE COMMAND ? —Y→ OPEN BUFFER MALLOC'ED FOR CHUNKED MODE COMMAND → A

N

A ←Y— NO PARAMETERS TO FREE ?

N

PURGE THE PARAMETER SPACE LEFT IN THE INPUT QUEUE

CMDBUFSIZE = Z ? —Y→ Z = 0

N

Tail = Z

REPORT THE CHANGE OF TAIL STATUS TO HOST

A

40

# F I G. 17C

```
          GetBlock
             │
             ○
             │
    ┌─────────◇─────────┐  Y
    │    Head = Tail ?   │──────┐
    └─────────◇─────────┘      │
             │ N               │
    ┌─────────◇─────────┐  N   │
    │    Tail >= Head ?  │──────┼──────┐
    └─────────◇─────────┘      │      │
             │ Y               │      │
┌──────────────────────────────┐   ┌──────────────────────────────┐
│CONTIGUOUS FREE SPACE = CMDBUFSIZE - Tail│   │CONTIGUOUS FREE SPACE = Head - Tail│
└──────────────────────────────┘   └──────────────────────────────┘
             │
┌──────────────────────────────┐
│ W = Tail + CONTIGUOUS FREE SPACE │
└──────────────────────────────┘
             │
    ┌─────────◇─────────┐  Y
    │  W = CMDBUFSIZE ?  │──────────┐
    └─────────◇─────────┘          │
             │ N              ┌──────────┐
             │                │  W = 0   │
             │                └──────────┘
             │
┌──────────────────────────────┐
│ RECEIVE A WORD FROM THE COMMAND BUFFER │
└──────────────────────────────┘
             │
    ┌─────────◇─────────┐  Y
    │  ALL WORDS TO OUTPUT │──────┐
    │    CONTIGUOUSLY      │      │
    │         ?           │      │
    └─────────◇─────────┘      │
             │ N               │
      ┌──────────────┐         │
      │  W = W + 1    │         │
      └──────────────┘         │
             │                 │
      ┌──────────────┐
      │   Tail = W    │
      └──────────────┘
             │
┌──────────────────────────────────────────────┐
│ REPORT THE COMPLETION OF COMMAND COMMUNICATION TO HOST │
└──────────────────────────────────────────────┘
             │
  Y ┌─────────◇─────────┐
 ───│    DATA YET TO     │
    │      GET ?         │
    └─────────◇─────────┘
             │ N
         ┌────────┐
         │ RETURN │
         └────────┘
```

RECEPTION OF DATA FROM COMMAND BUFFER

# F I G. 18

```
┌────────────────────────────────┐
│ ReadRequestFromClient()        │
└────────────────────────────────┘

        ┌──────────────────────┐
        │   CALL QSpace()      │
        └──────────────────────┘

              ENOUGH SPACE               Y
                   ?
                   N

    ┌──────────────────────────────────┐
    │ WAIT UNTIL BUFFER IS EMPTY        │
    └──────────────────────────────────┘


    ┌──────────────────────────────────┐
    │  READ A REQUEST FROM A CLIENT    │
    └──────────────────────────────────┘


            ┌──────────────┐
            │   RETURN     │
            └──────────────┘

            (   END   )
```

# F I G. 19

room #4, SIZE
FREE SPACE

room #1, SIZE

OPECODE
DATA

room #3, SIZE

OPECODE
DATA

room #2, SIZE

OPECODE
DATA

# F I G. 20

```
┌─────────────────┐
│  QSpace()       │
└─────────────────┘
        │
        ○
        │
┌──────────────────────────┐
│ OPEN A CHANNEL OF GRAPHICS│
│ DEVICE VIEWED FROM UNIX   │
└──────────────────────────┘
        │
     ╱  SUCCESS ?  ╲
┌──────────────────┐
│ OUTPUT ERROR     │◀──
│ MESSAGE          │
└──────────────────┘
        │
   (  E X I T  )

┌──────────────────────────┐
│ GET EACH USED ROOM # AND SIZE│
└──────────────────────────┘
        │
┌──────────────────────────┐
│ GET EXECUTED ROOM #      │
└──────────────────────────┘
        │
┌──────────────────────────┐
│ CALCULATE USABLE ROOM #  │
└──────────────────────────┘
        │
┌──────────────────────────┐
│ CLOSE THE HANNEL OF GRAPHICS│
│ DEVICE VIEWED FROM UNIX   │
└──────────────────────────┘
        │
   (  RETURN  )
```

# F I G. 21

```
┌─────────────────────┐
│  WaitForSomething    │
└─────────────────────┘
           │
           ○
           │
           ▼
┌──────────────────────────────────────────────────────────┐
│ XQSpace(&room#[],&size[],&used_room[],&unused_room[])     │
└──────────────────────────────────────────────────────────┘
           │
           ▼
```

$\Sigma$size[] > Occupied_Space
OR
unused_room # < enough_#
?

N ............. Y

```
┌──────────────────────────────────────────────────────────┐
│ XQSpace(&room#[],&size[],&used_room[],&unused_room[])     │
└──────────────────────────────────────────────────────────┘
```

unused_room # > enough_# ?

Y

ARE THERE
(1)ANY EVENTS FROM
H/W OR USER, (2)ANY EVENTS FROM
CONNECTED CLIENTS, OR (3)ANY REQUESTS FOR
CONNECTION FROM UNCONNECTED
?

N

Y

```
┌─────────────┐
( RETURN       )
└─────────────┘
```